# EUROPÄISCHE PATENTSCHRIFT

(11) **EP 0 505 366 B1**
(45) Veröffentlichungstag und Bekanntmachung des Hinweises auf die Patenterteilung: **20.07.1994**
(21) Anmeldenummer: 90915703.4
(22) Anmeldetag: 18.10.1990
(51) Int. Cl.: G01B 9/02

(54) **INTERFEROMETERANORDNUNG**
INTERFEROMETER ARRANGEMENT
DISPOSITIF D'INTERFEROMETRE

(30) Priorität: 13.12.1989 AT 2829/89
(43) Veröffentlichungstag der Anmeldung: 30.09.1992
(73) Patentinhaber: Tabarelli, Werner, Dr., 9494 Schaan (LI)
(72) Erfinder: TABARELLI, Werner, FL-9494 Schaan (LI); LAZECKI, René, CH-9470 Buchs (CH)
(74) Vertreter: Hofinger, Engelbert, DDr.
(86) Internationale Anmeldenummer: AT9000102
(87) Internationale Veröffentlichungsnummer: WO9109271

(56) Entgegenhaltungen:
- US-A- 4 120 588
- US-A- 4 717 240
- Patent Abstracts of Japan, vol. 13, no. 239 (P879)(3587), 6 June 1989, & JP-A-143704

## Beschreibung

Die Erfindung betrifft eine Interferometeranordnung mit einem Interferometerkopf, der die wesentlichen optischen Komponenten der Interferometeranordnung enthält und dem Licht aus einer Laserlichtquelle über eine flexible Lichtleitfaser zugeführt wird.

Es sind bereits derartige Interferometeranordnungen bekannt, bei denen Laserlicht über flexible Lichtleitfasern einem mit einem Gehäuse versehenen Interferometerkopf zugeführt wird, dem in die wesentlichen optischen Komponenten des Interferometers angeordnet sind. Zu diesen optischen Komponenten zählt insbesondere ein Strahlteiler, der das von der außerhalb des Interferometerkopfes liegenden Lichtquelle stammende Laserlicht in einen Meßstrahl und einen Referenzstrahl aufteilt. Während der Referenzstrahl eine fixe Referenzstrecke durchläuft, wird der Meßstrahl über einen beweglichen Meßspiegel geführt. An einer Rekombinationseinrichtung, die baulich mit dem Strahlteiler zusammenfallen kann, werden Meß- und Referenzstrahlen überlagert und bilden dabei ein optisches Interferenzsignal. Dieses Interferenzsignal bzw. mehrere derartige Interferenzsignale werden über flexible Lichtleitfasern an eine außerhalb des Interferometerkopfes angeordnete photoelektrische Detektoreinrichtung geleitet, die diese optischen Interferenzsignale aus dem Interferometerkopf erfaßt und auswertet. Eine derartige Interferometeranordnung ist beispielsweise aus der US-PS 4,153,370 bekannt. Bei der bekannten Einrichtung tritt das Licht aus der Lichtzufuhr-Lichtleitfaser in den geschlossenen Innenraum des Interferometerkopfes aus, von wo es auf einen diskret aufgebauten Strahlteilerwürfel fällt. Der an einem Taststift befestigte Meßspiegel ist im Inneren des Interferometerkopf-Gehäuses angeordnet. Sowohl die vom Referenzstrahl durchlaufene Referenzstrecke als auch die vom Meßstrahl durchlaufene Meßstrecke liegen innerhalb des Interferometerkopfs und verlaufen durch das im Interferometerkopf vorhandene gasförmige Medium, über dessen Druck der Taststift samt Meßspiegel aus- und einfahrbar ist. Nachteilig wirkt sich zunächst aus, daß die im Inneren des Interferometerkopfs absichtlich hervorgerufenen Druckschwankungen auch die Brechzahl und damit die relevante Wellenlänge auf der Meßstrecke verändern. Mit der Veränderung dieser im Gasmedium vorhandenen Wellenlänge, in deren Einheiten ja das interferometrische Meßergebnis vorliegt, ergeben sich beträchtliche Meßfehler. Außerdem ist der Verschiebeweg des Meßspiegels, der innerhalb des Interferometerkopf-Gehäuses angeordnet ist, in der Praxis beschränkt, sodaß nur geringe Verschiebewege oder Entfernungen meßbar sind. Schließlich ergeben sich durch die unkollimierte Lichtführung innerhalb des Interferometerkopf-Gehäuses Nachweisprobleme, da die in die notwendigerweise dünnen Ausgangslichtleitfasern eingekoppelte Lichtleistung sehr gering ist. Bei Verwendung dickerer Ausgangslichtleitfasern wäre umgekehrt keine genaue Erfassung des transversalen räumlichen Interferenzmusters möglich.

Aufgabe der Erfindung ist es, eine Interferometeranordnung zur Entfernungs- bzw. Verschiebewegbestimmung zu schaffen, bei der Licht aus einer außerhalb des Interferometerkopfs angeordneten Laserlichtquelle in den Interferometerkopf gelangt, bei der außerhalb des Interferometerkopfes eine photoelektrische Detektoreinrichtung zur Erfassung und Auswertung von wenigstens einem optischen Interferenzsignal aus dem Interferometerkopf vorgesehen ist, und mit der auch die präzise Erfassung großer Entfernungen bzw. Verschiebewege (im Meterbereich und darüber) möglich ist, wobei der Interferometerkopf insbesondere gegen mechanische Einwirkungen unempfindlich sein soll.

Erreicht wird dies durch eine Interferometeranordnung mit
- einem Interferometerkopf, der einen starren Tragkörper aufweist, mit dem ein Strahlteiler zur räumlichen Aufteilung von Laserlicht in einen Meßstrahl und einen Referenzstrahl und wenigstens eine Rekombinationseinrichtung starr verbunden sind, an der jeweils ein über eine im Interferometerkopf verlaufende Referenzstrecke geführter Referenzstrahl und ein über einen beweglichen Meßspiegel oder eine reflektierende Meßfläche geführter Meßstrahl unter Bildung mindestens eines optischen Interferenzsignales interferieren, wobei der Interferometerkopf eine mit dem Tragkörper des Interferometerkopfes in Verbindung stehende Auskoppellinse zum Auskoppeln des im Interferometerkopf in mindestens einem Lichtwellenleiter geführten Meßstrahles auf eine außerhalb des Interferometerkopfes liegende Meßstrecke aufweist, und der Interferometerkopf weiters mindestens eine mit dem Tragkörper in Verbindung stehende Einkoppellinse zum Einkoppeln des nach Reflexion an einem außerhalb des Interferometerkopfes angeordneten Meßspiegel oder an einer reflektierenden Fläche von der Meßstrecke zurückkehrenden Meßstrahles in einen Lichtwellenleiter aufweist und wobei zur Führung von Referenzstrahl(en) und der im Interferometerkopf verlaufenden Teile des Meßstrahles Lichtwellenleiter vorgesehen sind, die mit dem Tragkörper des Interferometerkopfes starr in Verbindung stehen,
- einer außerhalb des Interferometerkopfes angeordneten Laserlichtquelle, deren Laserlicht dem Interferometerkopf zugeführt wird
- einer außerhalb des Interferometerkopfes angeordneten photoelektrischen Detektoreinrichtung zur Erfassung und Auswertung von wenigstens einem optischen Interferenzsignal aus dem Interferometerkopf,
- wobei zur Zufuhr von Laserlicht von der Laserlichtquelle zum Interferometerkopf und gegebenenfalls zur Übertragung der optischen Interferenzsignale aus dem Interferometerkopf zur photoelektrischen Detektoreinrichtung jeweils mindestens eine flexible Lichtleitfaser vorgesehen ist, wobei die flexible Lichtleitfaser zur Laserlicht-Zufuhr eine monomode Glasfaser ist
- und wobei die flexible Lichtleitfaser(n) am interferometerkopfseitigen Ende jeweils über einen lösbaren Faserverbinder mit einem Lichtwellenleiter des Interferometerkopfes lösbar verbindbar ist (sind).

Bei der erfindungsgemäßen Interferometeranordnung liegt der Meßspiegel und damit ein Großteil der Meßstrecke außerhalb des Interferometerkopfes. Dadurch lassen sich mit einem kompakten, leicht handzuhabenden Interferometerkopf auch große Entfernungen bzw. Verschiebewege präzise erfassen. Durch die räumliche Trennung des Interferometerkopfes von der Lichtquelle und der photoelektrischen Auswertschaltung erzielt man zunächst den bekannten Vorteil einer thermischen Entkopplung, wobei der Interferometerkopf selbst keine aktiven photoelektrischen oder elektrooptischen Bauelemente zu enthalten braucht. Darüberhinaus braucht der Interferometerkopf keine mechanisch bewegten Teile zu enthalten, womit die einmal festgelegte relative Justierung der optischen Komponenten im Interferometerkopf auch beim Hantieren mit dem Interferometerkopf sicher erhalten bleibt. Beim Interferometerkopf reduziert sich die Justierung für den Anwender im wesentlichen darauf, den Interferometerkopf und den Meßspiegel od. dgl. so anzuordnen, daß der vom Interferometerkopf auf die Meßstrecke gesandte Meßstrahl über die Einkoppellinse(n) wieder in den Interferometerkopf (bzw. darin angeordnete Lichtwellenleiter) eintritt. Insbesondere bei Verwendung eines gegen Verkippungen im wesentlichen invarianten Retroreflektors (Tripel-Spiegels) läßt sich dies einfach realisieren.

Die Lichtführung in Lichtwellenleitern und die Auskopplung des Meßstrahles auf eine freie Meßstrecke sind zwar an sich bekannt (beispielsweise DE-A-32 38 139). Dabei wurde aber bisher dem Umstand zu wenig Rechnung getragen, daß bei der Führung des bzw. der Referenzstrahlen und Teilen des Meßstrahles in Lichtwellenleitern (beispielsweise optisch integrierte Wellenleiterbahnen oder flexible Lichtleitfasern) mechanische Einwirkungen auf diese Lichtwellenleiter zu einer Veränderung des Interferenzsignales fuhren. Bei flexiblen Lichtleitfasern reicht beispielsweise bereits eine geringe Lageänderung aus, um das Interferenzsignal in unerwünschter Weise zu verändern. Während die Eigenschaft der Lichtwellenleiter, insbesondere von flexiblen Lichtleitfasern, auf äußere Einflüsse (Druck, Temperatur, aber auch einfache Lageänderungen) zu reagieren in interferometrischen Sensoreinrichtungen häufig ausgenutzt wird, ist dies bei Interferometern zur Verschiebeweg- bzw. Entfernungsbestimmung gerade nicht erwünscht. Bei dem in der, erfindungsgemäßen Interferometeranordnung enthaltenen Interferometerkopf sind daher neben Strahlteiler und Rekombinationseinrichtung auch die Lichtwellenleiter zumindest in jenem Bereich, wo Referenz- und Meßstrahlen im Interferometerkopf räumlich getrennt verlaufen (dort gehen nämlich relative Veränderungen der Lichtwellenleiter und der damit verbundenen Lichtführungseigenschaften direkt in das Meßergebnis ein), starr mit einem Tragkörper des Interferometerkopfes verbunden. Der Tragkörper des Interferometerkopfes kann auch mehrere fest miteinander verbundene Teile aufweisen, an denen die einzelnen optischen Komponenten fixiert sind. Wesentlich ist, daß die räumliche Lage von Strahlteiler und Rekombinationseinrichtung, der die Meß- und Referenzstrahlen im Interferometerkopf führenden Lichtwellenleiter und der Ein- und Auskoppellinsen des betriebsbereiten Interferometerkopfes zueinander robust festliegt, sodaß bei den in der Praxis auftretenden mechanischen Einwirkungen keine Lageänderungen der genannten fixierten optischen Komponenten, insbesondere der Lichtwellenleiter, und damit keine störenden Veränderungen des Interferenzsignales auftreten.

Die JP-A-143707 zeigt ebenfalls ein Interferometer, bei dem Licht in Lichtwellenleitern geführt ist und anschließend über eine Linse auf eine freie Meßstrecke ausgekoppelt wird. Die Lichtquelle und die Photodetektoren sind direkt am "Interferometerkopf" befestigt. Es erfolgt also keine Lichtzufuhr über flexible Lichtleitfasern, die über lösbare Faserverbinder anschließbar sind. Im übrigen ist auch die starre Festlegung der Lichtleitfasern im "Interferometerkopf" in der JP-A-143707 nicht geoffenbart.

Wie bereits erwähnt, läßt sich der Interferometerkopf als vollkommen passive Einheit realisieren, die weder im Betrieb mechanisch bewegte Bauteile noch aktive oder passive elektronische Komponenten zu enthalten braucht. Der Interferometerkopf kann als kompakte Baueinheit realisiert werden, die zur Verbindung mit der "Außenwelt" günstigerweise nur folgendes aufweist: Einen Eingang, über den Laserlicht aus einer Laserlichtquelle dem Interferometerkopf zugeführt wird; einen oder mehrere Ausgänge, über die der Interferometerkopf optische Interferenzsignale abgibt; und schließlich die Aus- und Einkoppellinsen zur Auskopplung des Meßstrahles auf die Meßstrecke bzw. Einkopplung desselben in den Interferometerkopf.

Eine bevorzugte Ausführungsform des Interferometerkopfs besteht darin, daß von dem als Wellenleiterkoppler ausgebildeten Strahlteiler bis zum Brennpunktsbereich der Auskoppellinse ein durchgehender Lichtwellenleiter bzw. mehrere hintereinander angeordnete, insgesamt durchgehende Lichtwellenleiter führt bzw. führen und daß vom Brennpunktsbereich jeder Einkoppellinse zu jeweils einer als Wellenleiterkoppler ausgebildeten Rekombinationseinrichtung ein durchgehender Lichtwellenleiter bzw. mehrere hintereinander angeordnete, insgesamt durchgehende Lichtwellenleiter führt bzw. führen. Damit ist sichergestellt, daß der Meßstrahl innerhalb des Interferometerkopfs vor der Auskopplung auf die eigentliche Meßstrecke außerhalb des Interferometerkopfes und nach der Einkopplung in den Interferometerkopf ständig in wohldefinierter Weise und gegen äußere Einwirkungen geschützt geführt ist. Den Referenzstrahl wird man innerhalb des Interferometerkopfs ebenfalls günstigerweise durchgehend in einem Lichtwellenleiter führen. In einem Wellenleiterkoppler als Rekombinationseinrichtung können dann der in einem Lichtwellenleiter geführte Referenzstrahl und der in einem Lichtwellenleiter geführte, von der Meßstrecke zurückgekehrte Meßstrahl unter Bildung eines klar definierten optischen Interferenzsignals zur Interferenz gebracht werden.

Wie bereits erwähnt, ist besonders jener Bereich der Lichtwellenleiter kritisch, in denen Meß- und Referenzstrahl räumlich getrennt geführt werden. Um die Unempfindlichkeit des Interferometerkopfes weiter zu erhöhen, ist es insbesondere beim Arbeiten mit polarisiertem Licht günstig, wenn zur Führung des Laserlichtes von einem Eingang des Interferometerkopfes zum Strahlteiler zumindest abschnittweise ein oder mehrere vorzugsweise starr mit dem Tragkörper verbundene(r) Lichtwellenleiter vorgesehen ist (sind) und daß zur Führung des bzw. der optischen Interferenzsignale(s) nach der bzw. den Rekombinationseinrichtung(en) zu mindestens einem Ausgang des Interferometerkopfes zumindest abschnittweise ein oder mehrere vorzugsweise starr mit dem Tragkörper verbundene(r) Lichtwellenleiter vorgesehen ist (sind). Damit verläuft das Laserlicht im Interferometerkopf praktisch ausschließlich in fixierten Lichtwellenleitern,wobei es im Hinblick auf einen definierten Polarisationszustand des Laserlichts günstig ist, wenn die Lichtwellenleiter im Interferometerkopf im wesentlichen in einer Ebene, vorzugsweise auf einer ebenen Unterlage angeordnet sind.

Als Lichtwellenleiter im Interferometerkopf eignen sich insbesondere Lichtleitfasern, die zunächst flexibel sind und sich im Interferometerkopf einfach verlegen lassen. Dabei können die Lichtleitfasern im Interferometerkopf zumindest abschnittweise schleifen- oder spulenförmig verlegt sein, um beispielsweise scharfe Knicke zu vermeiden. Nach dem Verlegen der flexiblen Lichtleitfasern müssen diese gemäß der Erfindung zumindest in jenem Bereich, wo Referenz- und Meßstrahlen getrennt verlaufen, starr mit dem Tragkörper verbunden werden. Dies kann auf einfache Weise dadurch geschehen, daß die Lichtleitfasern im Interferometerkopf zumindest stellenweise, vorzugsweise im wesentlichen über ihre gesamte Länge am Tragkörper bzw. einem daran befestigten Teil festgeklebt sind. Die Verbindung der Lichtleitfasern im Interferometerkopf mit dem Tragkörper kann auch durch Vergießen der Lichtleitfasern mit einer aushärtenden Masse erzielt werden, wobei die ausgehärtete Masse fest am Tragkörper haftet und eine starre räumliche Lage der Lichtleitfasern definiert. Als aushärtende Masse kann vorzugsweise ein im ausgehärteten Zustand duroplastisches Harz verwendet werden. Im allgemeinen werden solche aushärtenden Massen durch Mischen eines Binders mit einem Härter erzielt, wodurch zunächst eine mehr oder weniger zäh-fließende Masse entsteht, die anschließend (meist bei Raumtemperatur) aushärtet. Eine günstige aushärtende Masse ist beispielsweise ein Epoxid-Harz. Epoxid-Harze haben den Vorteil, daß sie beim Aushärten einen geringen Schwund aufweisen und daher praktisch spannungsfrei härten. Außerdem sind Epoxid-Harze im ausgehärteten Zustand schlagzäh und haften gut an den meisten Materialien. Grundsätzlich eignen sich natürlich auch andere aushärtende Massen zum Vergießen der Lichtleitfasern im Interferometerkopf. Günstigerweise werden nicht nur die den Meßstrahl und den Referenzstrahl führenden Lichtleitfasern mit einer aushärtenden Masse vergossen. Vielmehr ist bevorzugt vorgesehen, daß alle optischen Komponenten des Interferometerkopfes samt Lichtwellenleiter, vorzugsweise zusammen mit den Ein- und Auskoppellinsen bzw. deren Halterungen, und der Tragkörper miteinander vergossen sind. Damit ergibt sich bei ausgehärteter Masse eine robuste, in ihrer Justierung fixierte Interferometerkopfeinheit, wobei durch das Vergießen zusätzlich zur "Starrheit" eine Isolation zur Umgebung (beispielsweise gegen Wärme, Schall etc.) erreicht wird und der gesamte Interferometerkopf dadurch unempfindlicher gegenüber Schwankungen der Umgebungsbedingungen wird. Wenngleich ein starrer Tragkörper, beispielsweise aus Metall, momentan günstig erscheint, ist es grundsätzlich auch denkbar, daß die ausgehärtete Masse, mit der die optischen Komponenten und Lichtwellenleiter des Interferometerkopfs vergossen sind, selbst den Tragkörper bildet.

Um einen verbesserten Schutz gegen mechanische Einwirkungen und eine verbesserte Isolation gegen die Umgebung zu erhalten, ist es gemäß einer bevorzugten Ausführungsform des Interferometerkopfs günstig, wenn der Tragkörper von einem fest mit ihm verbundenen Gehäuse umgeben ist oder selbst ein Gehäuse bildet. Der Tragkörper und/oder das Gehäuse bestehen günstigerweise aus Metall, welches eine hohe mechanische Festigkeit und eine gute Wärmeleitfähigkeit aufweist, womit lokale Temperaturunterschiede im Interferometerkopf weitgehend vermieden werden können. Durch Anbringung von Isolations- bzw. Dämmmaterialien kann eine Isolation gegenüber der Umgebung und damit eine Unempfindlichkeit gegenüber relativ raschen Schwankungen der Umgebungsbedingungen (insbesondere der Temperatur) erreicht werden. Eine allmähliche Angleichung der Temperatur des Interferometerkopfs an die Umgebunstemperatur wird sich allerdings nicht vermeiden lassen. Um bei solchen "langsamen" Temperaturänderungen eine Beeinträchtigung des Interferenzsignales sicher zu vermeiden, ist gemäß einer bevorzugten Ausführungsform der Erfindung vorgesehen, daß der Weg, den jeder der Referenzstrahlen im Lichtwellenleiter zwischen Strahlteiler und Rekombinationseinrichtung zurück legt, im wesentlichen gleich lang ist wie die Summe jener Wege, die der Meßstrahl im Interferometerkopf in Lichtwellenleitern zurücklegt. Bei einer Temperaturänderung dehnen sich die Lichtwellenleiterabschnitte, in denen der Referenzstrahl bzw. die Referenzstrahlen, und die Lichtwellenleiterabschnitte, in denen der Meßstrahl geführt wird, im gleichen Maße aus, sodaß es durch die Temperaturänderung zu keiner unerwünschen Phasenverschiebung des optischen bzw. der optischen Interferenzsignale kommt.

Das genannte Gehäuse des Interferometerkopfs ist gemäß einer bevorzugten Ausführungsform der Erfindung wannenförmig ausgebildet, wobei zumindest ein Großteil der optischen Komponenten des Interferometerkopfes samt Lichtwellenleitern im Bereich der Gehäusewanne, vorzugsweise im Bereich eines eben ausgebildeten Wannenbodens angeordnet ist. In ein solches wannenförmiges Gehäuse lassen sich die optischen Komponenten und Lichtwellenleiter einfach und geschützt unterbringen. Außerdem läßt sich ein solches wannenförmiges Gehäuse leicht mit einer aushärtenden Masse ausgießen, wobei alle optischen Komponenten samt Lichtwellenleitern gegebenenfalls nach Justierung justierbarer Komponenten (beispielsweise der Ein- und Auskoppellinsen) miteinander vergossen sind. Ein besonders hoher Schutz wird erreicht, wenn das Gehäuse allseitig geschlossen bzw. durch einen lösbar befestigten Deckel od.dgl. verschließbar ist.

Die Ein- und Auskoppellinsen, die günstigerweise im Bereich der Gehäusewandung des Interferometerkopfs angeordnet sind, können starr mit dem Tragteil des Interferometerkopfs in Verbindung stehen. Günstiger erscheint es jedoch, wenn die Ein- und Auskoppellinsen am Tragteil, vorzugsweise über verstellbare Linsenhalterungen, verstellbar gelagert sind und in der eingestellten Lage vorzugsweise über Befestigungsmittel arretierbar sind. Damit läßt sich die Ausrichtung der Auskoppellinse und der Einkoppellinse beim Hersteller des Interferometerkopfs ein für allemal richtig festlegen und arretieren. Die richtig eingestellten Linsen samt Linsenhaltungen können dann beispielsweise zusammen mit den optischen Komponenten und Lichtwellenleitern im Interferometerkopf fix vergossen werden. Im allgemeinen wird man die Auskoppellinse und die Einkoppellinse parallel zueinander ausrichten und als Meßspiegel einen Retroreflektor benutzen, der unabhangig von seiner Verkippung den aus der Auskoppellinse austretenden Meßstrahl parallel zu sich selbst zurückwirft. Durch die Parallelausrichtung der Aus- und Einkoppellinsen wird dann der vom Retroreflektor zurückkehrende Meßstrahl über die Einkoppellinse in einen Eingangs-Lichtwellenleiter richtig eingekoppelt.

Die Laserlicht-Zufuhr erfolgt über eine flexible Lichtleitfaser wobei der Interferometerkopf einen lösbaren Faserverbinder zum Anschluß an eine solche laserlichtzuführende Lichtleitfaser aufweist. Dieselben Überlegungen wie für die Lichtzufuhr gelten für die Übertragung der optischen Interferenzsignale aus dem Interferometerkopf zu einer photoelektrischen Detektoreinheit außerhalb des Interferometerkopfs. Auch hier sind flexible Lichtleitfasern günstig, die über mindestens einen lösbaren Faserverbinder mit dem Interferometerkopf in Verbindung stehen. Durch eine solche lösbare Verbindung des Interferometerkopfs mit flexiblen Lichtleitfasern wird die Handhabung erheblich erleichtert. Beispielsweise können die flexiblen Lichtleitfasern einfach verlegt werden, bevor sie über die lösbaren Faserverbinder an den Interferometerkopf angesteckt werden. Außerdem lassen sich die zum bzw. vom Interferometerkopf führenden flexiblen Lichtleitfasern im Falle einer Beschädigung rasch und einfach auswechseln. Auch ein durch große Gewalteinwirkung beschädigter Interferometerkopf könnte so rasch und einfach ausgetauscht werden. Die lösbaren Faserverbinder könnten grundsätzlich außerhalb des Interferometerkopfes an Lichtleitfaserstücken, die mit dem Interferometerkopf in Verbindung stehen, angebracht sein. Vorteilhafter ist jedoch eine bevorzugte Ausführungsform, die dadurch gekennzeichnet ist, daß der bzw. die Faserverbinder zum lösbaren Anschluß von einer oder mehreren flexiblen Lichtleitfaser(n) an den Interferometerkopf jeweils als zweiteilige Faserkupplung(en) ausgeführt ist (sind), wobei der interferometerkopfseitige Teil jeder Faserkupplung an einen oder mehrere Lichtwellenleiter im Interferometerkopf angeschlossen ist und mit dem Tragkörper bzw. dem Gehäuse des Interferometerkopfes verbunden oder daran ausgebildet ist, und wobei der mit dem interferometerkopfseitigen Teil korrespondierende andere Teil jeder Faserkupplung an eine oder mehrere flexible Lichtleitfaser(n) angeschlossen ist. Ein solcher Interferometerkopf kann als kompakte Einheit ausgeführt werden, aus der zunächst keine Lichtleitfasern hinein- bzw. herausführen. Der Interferometerkopf weist als Eingang den interferometerkopfseitigen Teil einer Faserkupplung auf. Der andere Teil der Faserkupplung ist an einer flexiblen Lichtleitfaser angebracht, die Laserlicht aus der Laserlichtquelle führt. Durch Verbinden (beispielsweise Zusammenstecken) der bei den Teile der Faserkupplung kann dem Interferometerkopf aus der Laserlichtquelle über den Eingang Laserlicht zugeführt werden. Ähnlich ist die Situation bei der übert ragung der optischen Interferenzsignale aus dem Interferometerkopf. Auch hier ist eine zweiteilige Faserkupplung günstig, wobei der interferometerkopfseitige Teil mit dem Tragkörper oder Gehäuse des Interferometerkopfs verbunden ist und dessen Ausgang bildet Zur übertragung der optischen Interferenzsignale kann eine oder mehrere Lichtleitfasern vorgesehen sein, die mit einem Teil der Faserkupplung verbunden sind, welcher in den interferometerkopfseitigen Teil der Faserkupplung am Ausgang des Interferometerkopfs paßt. Sind mehrere flexible Lichtleitfasern zur Übertragung von optischen Interferenzsignalen aus dem Interferometerkopf an eine photoelektrische Detektoreinheit vorgesehen, so können diese Lichtleitfasern jeweils über eine eigene zweiteilige Faserkupplung mit dem Interferometerkopf verbindbar sein. Es ist aber auch möglich, alle derartigen flexiblen Lichtleitfasern gemeinsam über eine Mehrfach-Faserkupplung mit dem Interferometerkopf zu verbinden.

Während die Lage der optischen Komponenten und Lichtwellenleiter im Interferometerkopf bereits fest liegt, muß der Interferometerkopf als Ganzes an der Einsatzstelle so ausgerichtet werden, daß der Meßstrahl parallel zum Verschiebeweg des Meßspiegels verläuft. Um dies auf einfache Weise sicherzustellen, kann gemäß einer bevorzugten Ausführungsform der Erfindung vorgesehen sein, daß der Interferometerkopf an einem Basisteil verstellbar gelagert ist. Dieser Basisteil kann beispielsweise eine Grundplatte sein, die zum Interferometerkopf gehört. Der Basisteil kann aber andererseits auch von einem Maschinenteil od. dgl. gebildet sein, an dem der Interferometerkopf zu befestigen ist. Der Interferometerkopf weist günstigerweise einstellbare Justierelemente auf, um die räumliche Lage des Tragkörpers relativ zum Basisteil festzulegen. Eine bevorzugte konstruktive Ausführungsform besteht darin, daß der Tragkörper über eine kugelgelenkartige Verbindung mit dem Basisteil verbunden ist und die Justierelemente am Interferometerkopf verstellbar gelagerte Schrauben umfassen, die sich jeweils mit ihrer vorzugsweise abgerundeten Spitze an einer Fläche des Basisteiles abstützen. Auf diese Weise ist eine Justierung des Tragkörpers des Interferometerkopfs in allen Raumrichtungen möglich.

Die erfindungsgemäße Interferometeranordnung weist zur Zufuhr von Laserlicht von der Laserlichtquelle zum Interferometerkopf und gegebenenfalls zur übertragung der optischen Interferenzsignale aus dem Interferometerkopf zur photoelektrischen Detektoreinheit jeweils mindestens eine flexible Lichtleitfaser auf. Die flexiblen Lichtleitfasern weisen am interferometerkopfseitigen Ende einen lösbaren Faserverbinder auf. Bevorzugt ist vorgesehen, daß für die flexiblen Lichtleitfasern am interferometerkopfseitigen Ende und am gegenüberliegenden Ende jeweils ein lösbarer, vorzugsweise zweiteiliger Faserverbinder vorgesehen ist. Die flexiblen Lichtleitfasern können damit nicht nur am Interferometerkopf in einfacher Weise ein- und ausgesteckt werden, es ist vielmehr auch eine lösbare Verbindung im Bereich der Laserlichtquelle bzw. der photoelektrischen Detektoreinrichtung gegeben.

Damit können je nach Anwendungsfall verschieden lange flexible Lichtleitfasern verwendet werden, die außerdem im Falle einer Beschädigung rasch und einfach ausgetauscht werden können. Für die flexible Lichtleitfaser zur Laserlichtzufuhr eignet sich insbesondere eine monomode Glasfaser, in der wohldefinierte Wellenfronten vorhanden sind. Besonders günstig erscheint die Verwendung einer polarisationserhaltenden Lichtleitfaser zur Laserlichtzufuhr, da es bei der Verwendung von "normalen" monomoden Lichtleitfasern durch Bewegen dieser Lichtleitfasern (z.B. beim Verlegen oder auch im Betrieb) unter Umständen zu unerwünschten Veränderungen des Polarisationszustandes des Lichtes kommen kann, die die optischen Interferenzsignale und damit das Meßergebnis verfälschen können.

Auch im Interferometerkopf ist die Lichtführung in Einmoden-Wellenleitern, beispielsweise in monomoden Glasfasern, günstig. In derartigen Einmoden-Wellenleitern hat man wohldefinierte Wellenfronten, und damit erzielt man bei der Rekombination von Meß- und Referenzstrahl gut definierte, optische Interferenz - signale.

Zur übertragung der optischen Interferenzsignale aus dem Interferometerkopf an eine photoelektrische Detektoreinheit reichen multimode Lichtleitfasern aus.

Die erfindungsgemäße Interferometeranordnung kann auch mehrere, vorzugsweise gleichartige Interferometerköpfe aufweisen, die günstigerweise über flexible Lichtleitfasern alle mit einer gemeinsamen Laserlichtquelle verbunden sind. Außerdem ist es günstig, alle Interferometerköpfe an eine zentrale photoelektrische Detektoreinrichtung anzuschließen. Ordnet man jedem Interferometerkopf einen eigenen beweglichen Meßspiegel zu, so läßt sich beispielsweise eine Interferometeranordnung realisieren, mit der in allen drei Raumrichtungen gemessen werden kann.

Weitere Einzelheiten der Erfindung werden in der folgenden Figurenbeschreibung näher erläutert.

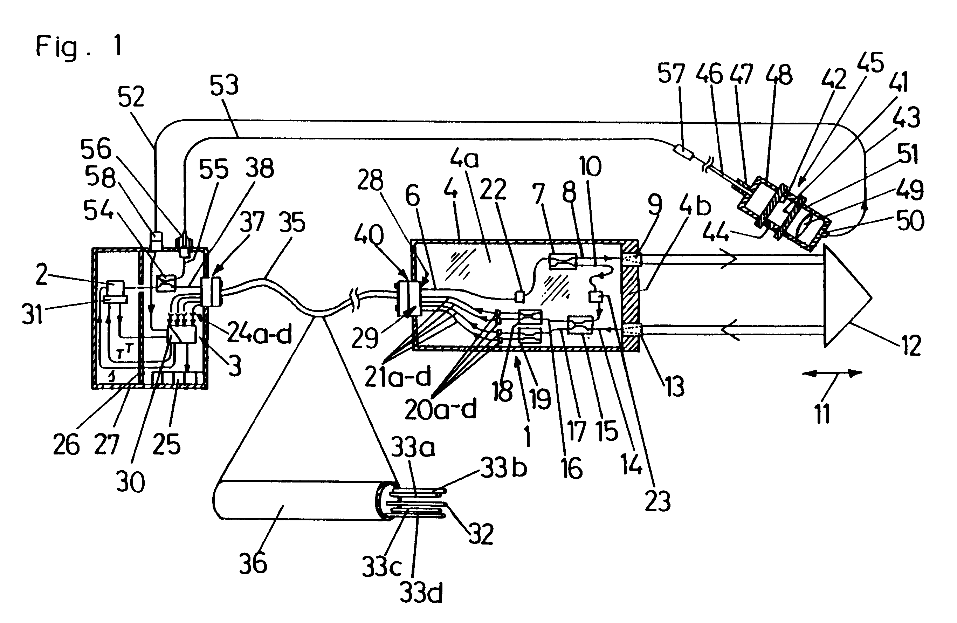

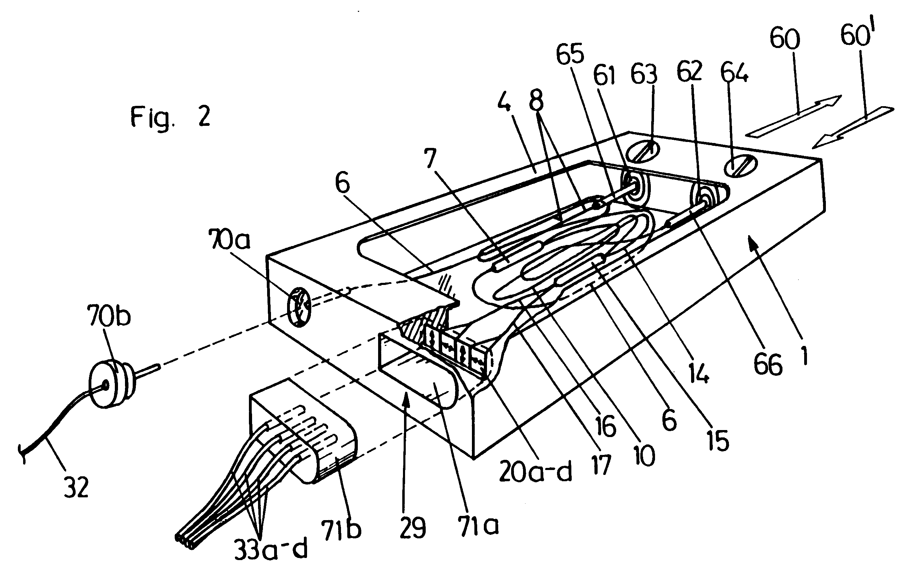

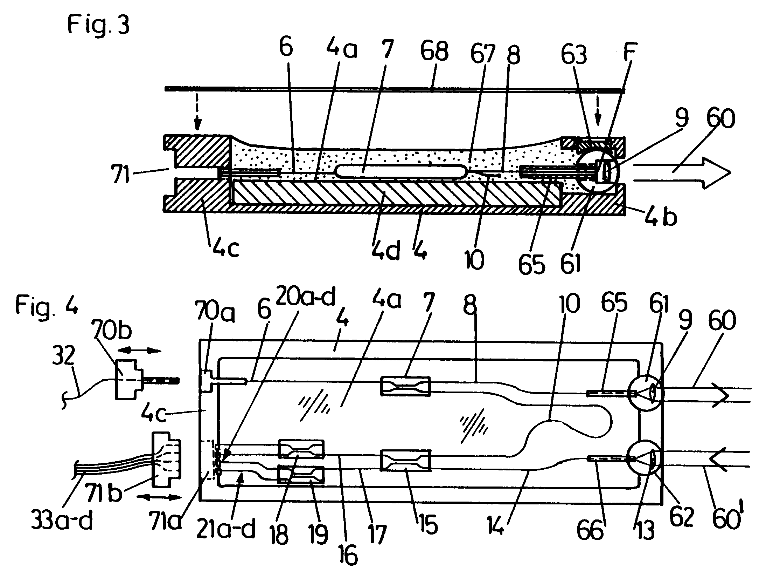

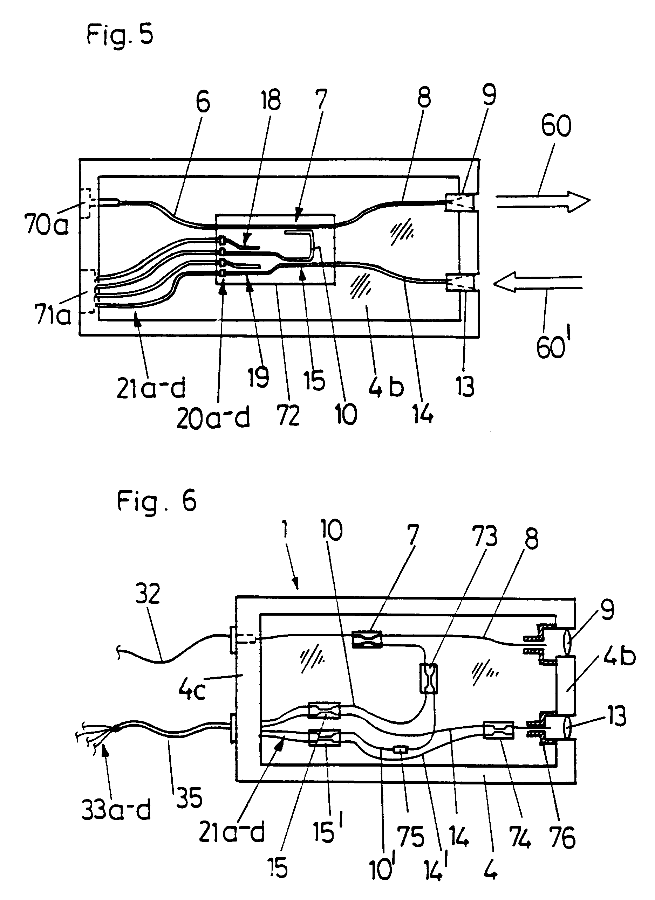

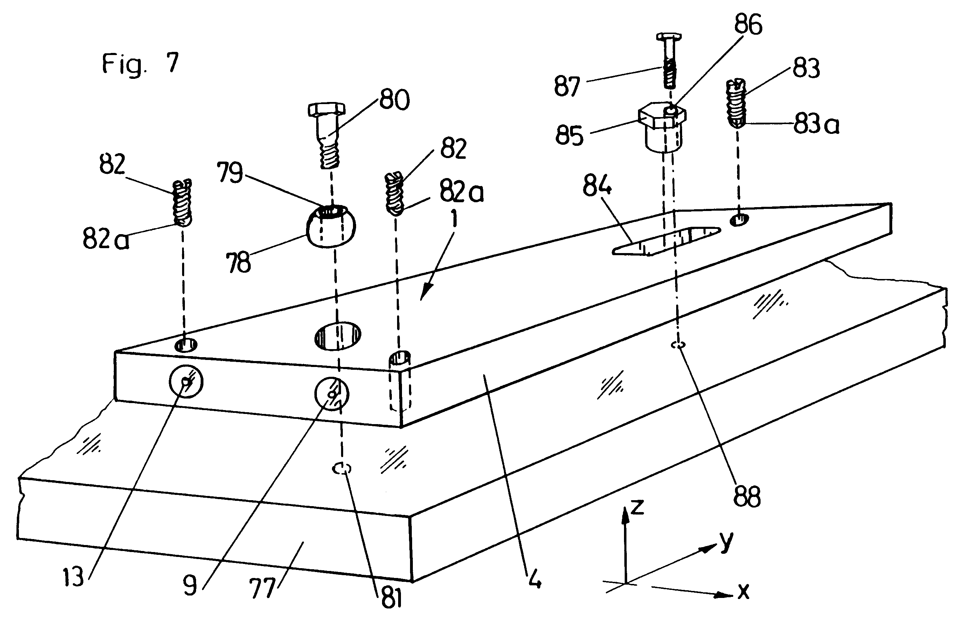

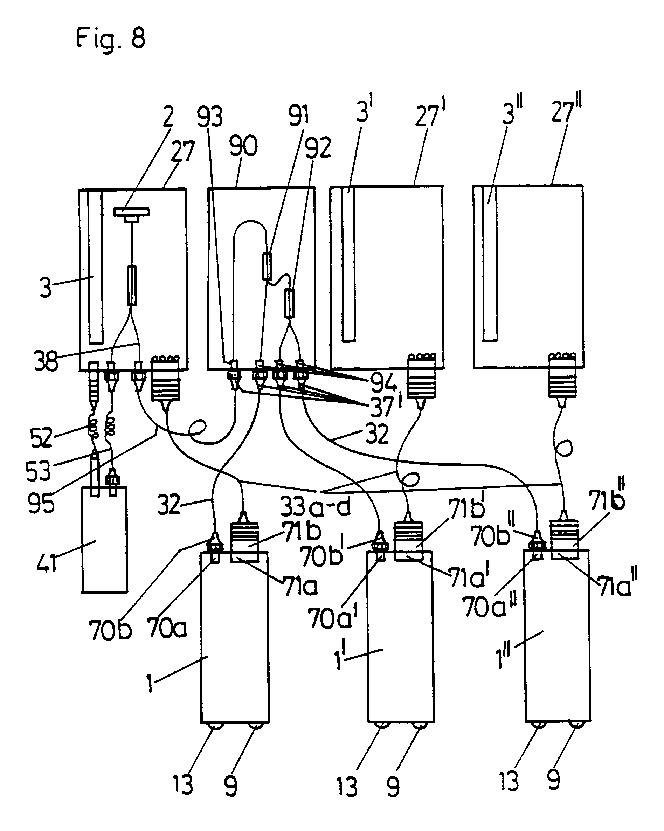

Die Fig. 1 zeigt eine schematische Darstellung eines Ausführungsbeispiels der erfindungsgemäßen Interferometeranordnung, wobei ein Teil des zum bzw. vom Interferometerkopf führenden Lichtleitfaserkabels vergrößert dargestellt ist. Die Fig. 2 zeigt eine perspektivische Ansicht auf ein Ausführungsbeispiel des in der erfindungsgemäßen Interferometeranordnung enthaltenen Interferometerkopfs, wobei das wannenförmige Gehäuse des Interferometerkopfs noch mit einer aushärtenden Masse auszugießen ist. Die Fig. 3 zeigt einen vertikalen Längsschnitt durch den in Fig. 2 gezeigten Interferometerkopf, wobei der Längsschnitt durch die Auskoppellinse gelegt ist und der Interferometerkopf bereits mit einem ausgehärteten Harz ausgegossen ist. Die Fig. 4 zeigt eine vereinfachte schematische Draufsicht auf ein Ausführungsbeispiel des Interferometerkopfes. Die Fig. 5 zeigt ein Ausführungsbeispiel, bei der die zentralen optischen Komponenten des Interferometerkopfs und ein Teil der Lichtwellenleiter auf einem Trägersubstrat integriert sind. Die Fig. 6 zeigt in einer schematischen Darstellung ein Ausführungsbeispiel, bei dem vier phasenverschobene Ausgänge durch eine Aufteilung des Referenz- und Meßstrahles und durch zwei Rekombinationseinrichtungen erzeugt werden. Die Fig. 7 zeigt eine schematische Darstellung eines im wesentlichen geschlossenen Interferometerkopfs samt den Justierelementen zur Festlegung der räumlichen Lage des Interferometerkopfs. Schließlich zeigt die Fig. 8 ein Ausführungsbeispiel der erfindungsgemäßen Interferometeranordnung mit drei im wesentlichen identischen Interferometerköpfen.

Die in Fig. 1 dargestellte Interferometeranordnung weist einen Interferometerkopf 1, eine Laserdiode 2 als Laserlichtquelle zur Versorgung des Interferometerkopfs 1 mit Laserlicht und eine photoelektrische Detektoreinrichtung 3 zur Auswertung der aus dem Interferometerkopf stammenden optischen Interferenzsignale auf. Der Interferometerkopf 1 ist von einem geschlossenen Gehäuse 4 aus Metall umgeben und enthält in seinem Inneren mehrere, durch monomode Glasfasern verbundene optische Komponenten, die im folgenden näher beschrieben werden. Das in die flexible Lichtleitfaser 6 gelange Laserlicht aus der Laserdiode 2 erreicht einen Strahlteiler 7, der eine Aufteilung in Meß- und Referenzstrahl vornimmt. Der Meßstrahl wird über die monomode Glasfaser 8 und die Auskoppellinse 9 (Gradientenindexlinse) auf die außerhalb des Interferometerkopfs liegende, im Umgebungsmedium verlaufende Meßstrecke geführt. Der Referenzstrahl verläuft in der Referenzfaser 10 im Interferometerkopf 1. An einem in Richtung des Doppelpfeiles 11 verschieblichen (nicht dargestellten) Bauteil ist der Retroreflektor 12 befestigt. Dieser Retroreflektor 12 reflektiert den Meßstrahl mit Strahlversatz zum Interferometerkopf 1 zurück. Über eine gesonderte Einkoppellinse 13 gelangt der Meßstrahl in die Glasfaser 14. In der als Faserkoppler ausgeführten Rekombinationseinrichtung 15 werden der von der Meßstrecke zurückkehrende Meßstrahl und der in der Referenzfaser 10 geführte Referenzstrahl zur Interferenz gebracht. Zwei weitere Strahlteiler 18 und 19 sind an die beiden komplementären Ausgänge 16 und 17 der Rekombinationseinrichtung 15 angeschlossen. Über Polarisationsfilter 20a bis d gelangen die phasenverschobenen optischen Interferenzsignale in die zur Detektoreinrichtung 3 führenden flexiblen Lichtleitfasern 21a bis d.

Aus den vier jeweils um 90^{o} gegeneinander phasenverschobenen Interferenzsignalen lassen sich in bekannter Weise neben dem Verschiebeweg des Retroreflektors 12 auch die Verschieberichtung und der Modulationshub des Interferenzsignals ermitteln. Die dargestellte Interferometeranordnung wird also mit zwei senkrecht aufeinanderstehenden Polarisationen betrieben. Dazu ist ein Polarisator 22 vorgesehen, der unter 45^{o} zu den Polarisationsfiltern 20a-d ausgerichtet ist. Beide Polarisationsanteile durchlaufen dieselbe Meßstrecke. Im Referenzzweig 10 ist ein λ/4-Plättchen (Viertelwellen-Platte) 23 angeordnet, um eine Polarisationsrichtung gegenüber der anderen um 90^{o} in der Phase zu verschieben.

Die Detektoreinrichtung 3 weist vier Photodetektoren 24a bis d auf. Diese vier Photodetektoren 24a bis d erzeugen aus den optischen Interferenzsignalen elektrische Signale, die von einer Elektronikeinheit ausgewertet werden. Das Ergebnis (die Lage des Retroreflektors 12) wird über eine Anzeige 25 angezeigt. Die Laserdiode 2 befindet sich in einem durch die wärmeisolierende Dämmwand 26 abgeteilten Gehäusebereich des vom Interferometerkopf räumlich getrennten Lichtquellen- und Auswertgehäuses 27.

Bei dem in Fig. 1 gezeigten Ausführungsbeispiel bildet das Gehäuse 4 mit dem ebenen Boden 4a einen starren Tragkörper, mit dem der Strahlteiler 7 und die Rekombinationseinrichtung 15 beispielsweise durch Verkleben starr verbunden sind. Erfindungsgemäß sind auch die den Meßstrahl führenden Lichtleitfaserstücke 8 und 14 sowie die den Referenzstrahl führende Referenzfaser 10 starr mit dem Tragkörper bzw. Gehäuseboden 4a verbunden.

Damit kann es im kritischen Bereich, wo Referenz- und Meßstrahl innerhalb des Interferometerkopfes 1 räumlich getrennt verlaufen, zu keiner Lageänderung der zunächst flexiblen Lichtleitfaserstücke 8,10 und 14 kommen. Solche Lageänderungen könnten nämlich in unerwünschter Weise die von der Rekombinationseinrichtung 15 abgegebenen optischen Interferenzsignale verändern. Man ist aber daran interessiert, daß lediglich eine Bewegung des Meßspiegels 12 eine derartige Veränderung der optischen Interferenzsignale bewirkt, sodaß schließlich über die Anzeige 25 die korrekte Lage bzw. der korrekte Verschiebeweg des Retroreflektors 12 angezeigt wird. Um die nötige "Starrheit" der Verbindung zwischen Lichtleitfasern und Tragkörper des Interferometerkopfs zu erzielen, reicht es im allgemeinen aus, wenn die Lichtleitfasern stellenweise am Tragkörper festgeklebt sind. Eine noch bessere Verbindung zwischen Lichtleitfasern und Tragkörper wird man natürlich erzielen, wenn man die Lichtleitfasern über ihre gesamte Länge mit dem Tragkörper verbindet, beispielsweise daran festklebt.

Die Auskoppellinse 9 und die Einkoppellinse 13 des betriebsbereiten Interferomterkopfs stehen starr mit dessen Tragkörper in Verbindung. Bei dem in Fig. 1 dargestellten Ausführungsbeispiel sind die Aus- bzw. Einkoppellinsen 9,13 starr in die vordere Gehäusewand 4b des den Tragkörper bildenden Gehäuses 4 eingesetzt. Die exakte Parallelausrichtung der beiden Linsen 9 und 13, die sicherstellt, daß der vom Retroreflektor 12 zurückreflektierte Meßstrahl tatsächlich in die Lichtleitfaser 14 eingekoppelt wird, ist beim vorliegenden Ausführungsbeispiel dadurch erreicht, daß die Linsen 9 und 13 in exakt parallele Bohrungen der metallischen Vorderwand 4b des Gehäuses 4 eingesetzt, beispielsweise eingeklebt, sind, wobei die zylindrische Außenfläche der Linsen 9 und 13 an der Innenwand der Bohrung anliegt. Derartige parallele Bohrungen lassen sich mit relativ geringem Aufwand exakt herstellen.

Insgesamt stehen der Strahlteiler 7, die Rekombinationseinrichtung 15, die beiden Linsen 9 und 13, die den Meßstrahl führenden Lichtleitfaserstücke 8 und 14 sowie die den Referenzstrahl führende Referenzfaser 10 starr mit dem Interferometerkopf-Gehäuse 4 (Tragkörper) in Verbindung, womit sich eine gegen Druck-,Stoß- und Schockeinwirkungen umempfindlich Baueinheit ergibt. Diese Unempfindlichkeit gegen mechanische Einflüsse wird weiters noch dadurch verbessert, daß auch die übrigen Komponenten und Lichtleitfasern im Interferometerkopf starr mit diesem verbunden, beispielsweise verklebt sind. Insbesondere ist zur Führung des Laserlichts vom Eingang 28 des Interferometerkopfes 1 zum Strahlteiler 7 eine Starr mit dem Interferometerkopf-Gehäuse 4 verbundene Lichtleitfaser 6 vorgesehen, und es sind zur Führung der optischen Interferenzsignale nach der Rekombinationseinrichtung 15 zum Ausgang 29 ebenfalls starr mit dem Gehäuse 4 verbundene Lichtleitfasern 16,17 und 21a bis d vorgesehen. Zusätzlich bietet das im wesentlichen geschlossene Gehäuse 4, das beispielsweise mit einem lösbar befestigten Deckel dicht verschließbar ist, einen Schutz gegen mechanische Störeinflüsse. Außerdem erhöht ein solches Gehäuse die Unempfindlichkeit gegen Schwankungen der Umweltbedingungen. Um bei Temperaturänderungen, die sich mit der Zeit auch auf das Innere des Gehäuses 4 übertragen, keine unerwünschte Veränderungen des Interferenzsignales zu haben, ist vorgesehen, daß die Summe der Längen der Lichtleitfaserstücke 8 und 14 in etwa gleich der Länge der Referenzfaser 10 (Referenzstrahl) ist. Bei Temperaturänderungen dehnen sich alle diese Lichtleitfasern in gleichem Maße aus, sodaß es zu keiner relativen Phasenverschiebung zwischen Meß- und Interferenzstrahl und damit zu keiner Veränderung des optischen Interferenzsignales in der Rekombinationseinrichtung kommt, wenn der Meßspiegel 12 feststeht.

Die Lichtleitfasern im Interferometerkopf 1 sind im wesentlichen in einer Ebene verlegt (Aufliegen auf dem ebenen Boden 4a des Gehäuses 4), womit es zu keinen unkontrollierten Veränderungen des Polarisationszustandes des in den Lichtleitfasern geführten Laserlichtes kommt.

Zur Zufuhr von Laserlicht aus der Laserlichtquelle 2 zum Interferometerkopf 1 ist eine flexible monomode Glasfaser 32 vorgesehen. Damit läßt sich der kleine kompakte Interferometerkopf unabhängig vom relativ sperrigen Lichtquellen- und Auswertgehäuse 27 an einer für die Messung geeigneten Stelle in der richtigen Ausrichtung anbringen. Insbesondere, wenn man mit polarisiertem Licht arbeitet, ist es günstig, wenn die Zufuhr-Lichtleitfaser 32 eine polarisationserhaltende Lichtleitfaser ist, weil dann unabhängig von der Verlegung dieser Lichtleitfaser am Eingang 28 bzw. beim Strahlteiler 7 ein wohldefinierter Polarisationszustand des Laserlichtes gegeben ist.

Zur Übertragung der (beim vorliegenden Ausführungsbeispiel 4) optischen Interferenzsignale an die photoelektrische Detektoreinrichtung 3 sind beim vorliegenden Ausführungsbeispiel vier multimode flexible Lichtleitfasern 33a bis d vorgesehen. Durch diese optische Übertragung der vier phasenverschobenen Interferenzsignale aus dem Interferometerkopf erzielt man eine hohe Unempfindlichkeit gegen elektromagnetische Einstreuungen.

Die flexible monomode Lichtleitfaser 32, über die Laserlicht dem Intferferometerkopf zugeführt wird, und vier Kunststoff-Lichtleitfasern 33a bis d, über die optische Interferenzsignale aus den Lichtleitfasern 21a bis d den Photodektoren 24a bis d zugeführt werden, sind in einem von einem Mantel 36 umgebenen Kabel zusammengefaßt. Das Faserkabel 35 ist am lichtquellenseitigen Ende über einen zweiteiligen Mehrfach-Faserverbinder 37 lösbar mit Lichtleitfasern im Lichtquellen- und Auswertgehäuse 27 verbunden. Im einzelnen ist die von der Laserdiode kommende Lichtleitfaser 38 mit der monomoden Glasfaser 33 lösbar verbunden. Die vier Kunststoff-Lichtleitfasern 33a bis d des Faserkabels 35 sind über den Stecker 37 mit Lichtleitfasern verbunden, die zu den Photodetektoren 24a bis d führen.

Am interferometerkopfseitigen Ende des Faserkabels 35 ist ein zweiter Mehrfach-Faserverbinder 40 (Faserkupplung) zur lösbaren Verbindung der Lichtleitfasern des Faserkabels 35 mit entsprechenden Fasern im Interferometerkopf herzustellen. Im einzelnen wird über die zweiteilige steckbare Faserkupplung 40 die monomode Glasfaser 32 mit der monomoden Glasfaser 6 verbunden. Außerdem erfolgt eine optische Kopplung der Lichtleitfasern 21a bis d mit den Lichtleitfasern 33a bis d des Faserkabels 35. Der interferometerkopfseitige Teil der Faserkupplung 40 ist fest mit dem Gehäuse 4 des Interferometerkopfs 1 verbunden, während der in diesem Teil der Faserkupplung passende andere Teil mit dem Faserkabel 35 verbunden ist. Damit läßt sich die optische Verbindung des Faserkabels mit dem Interferometerkopf rasch herstellen und wieder lösen. Das Faserkabel 35 läßt sich unter Beachtung der optischen Mindestlänge an die jeweiligen Einsatzbedingungen einfach anpassen, ist leicht verlegbar und kann bei Beschädigungen einfach und rasch ausgetauscht werden.

Dieser Austausch kann sogar vom Benutzer vorgenommen werden, da eine aufwendige Justage im Anschluß an den Austausch nicht nötig ist.

Da bei der erfindungsgemäßen Interferometeranordnung die eigentliche Meßstrecke großteils in einem gasförmigen Umgebungsmedium (meist Luft) verläuft und sich dort die relevante Lichtwellenlänge mit der von den Umgebungsbedingungen abhängigen Brechzahlen ändert, muß man zur Erzielung höchster Genauigkeiten diese Brechzahl bzw. die im gasförmigen Medium vorhandene Wellenlänge kennen. Man kann dazu in klimatisierten Räumen arbeiten, in denen man die Umgebungsbedingungen und damit die Brechzahl im wesentlichen konstant hält. Im allgemeinen stehen jedoch solche Räume nicht zur Verfügung. Dann kann man prinzipiell mit einem der bekannten Brechzahlbestimmungsverfahren bzw. Wellenlängenbestimmungsverfahren laufend die Brechzahl bzw. Lichtwellenlänge im gasförmigen Umgebungsmedium ermitteln. Beispielsweise bietet sich das Parameterverfahren an, bei dem man Temperatur, Druck, Feuchte und eventuell die Gaszusammensetzung der Umgebungsluft ermittelt und daraus die Brechzahl errechnet. Es besteht jedoch auch die Möglichkeit, die im gasförmigen Umgebungsmedium vorhandene Lichtwellenlänge durch Vergleich mit einer statischen Maßverkörperung (Etalon) zu ermitteln. Beim vorliegenden Ausführungsbeispiel ist zur im folgenden näher beschriebenen Kompensation von variablen Umweltbedingungen (Schwankungen der Brechzahl des Umgebungsmediums auf der Meßstrecke) ein statisches Etalon 41 vorgesehen, zwischen dessen teildurchlässigen Reflexionsflächen 42 und 43 ein Raumbereich liegt, der über die Öffnung 44 mit dem Umgebungsmedium kommuniziert. Die Länge des Etalons 41 (Abstand der parallelen teildurchlässigen Reflexionsflächen 42 und 43) ist bekannt und beträgt typischerweise einige Millimeter. Ein Ring 45 mit vernachlässigbar kleinem Wärmeausdehnungskoeffizienten (beispielsweise aus Glaskeramik) hält die beiden Reflexionsflächen 42 und 43 in dem gewünschten bekannten Abstand. Das Etalon ist an eine Licht aus der Laserdiode 2 führende, flexible Lichtleitfaser 46 angeschlossen, die bis auf den Bereich ganz am Etalon 41 (wie alle anderen Lichtleitfasern) durch eine einfache Linie dargestellt. Diese Lichtleitfaser 46 erlaubt es, das Etalon an einer günstigen Stelle und Lage im Bereich der Meßstrecke ohne aufwendig zu justierende optische Bauteile anzuordnen. Damit ist sichergestellt, daß auf der Meßstrecke, entlang der sich der Retroreflektor 12 bewegt, und zwischen den Reflexionsflächen 42 und 43 des Etalons tatsächlich dieselben Umweltbedingungen (Brechzahl) herrschen.

Um eine einwandfreie Justierung des Glasfaserendes bezüglich der Reflexionsflächen 42 und 43 zu erzielen, ist dieses Ende von einer an einem Abstandhalter 48 angebrachten ringförmigen Haltevorrichtung 47 gehalten. Damit ist die erforderliche Winkelgenauigkeit in der optischen Strahlführung ständig gewährleistet.

Im vorliegenden Ausführungsbeispiel ist die Lichtleitfaser 46 eine monomode Glasfaser, deren Ende eine ideale Punktlichtquelle darstellt. Damit ergibt sich hinter der Reflexionsfläche 43 ein durch die Linse 49 abgebildetes, präzises, gleichmäßig ausgeleuchtetes Interferenzringsystem. Eine Differentialdiode 50, die wie die Linse an einem Halter 51 befestigt ist, erfaßt einen Interferenzring des Interferenzringsystems und gibt in Abhängigkeit von der Lage des Interferenzringes über die mittels der Stecker 58 angesteckte elektrische Leitung 52 ein Signal an die Laserdioden-Regeleinheit 31 ab.

Die Emissionsfrequenz der Laserdiode 2 wird einerseits über Injektionsstrom und Temperatur und andererseits durch frequenzselektive optische Rückkopplung aus dem Etalon 41 im Interferometerkopf 1 geregelt. Zwischen den beiden etwa 5 mm beabstandeten Reflexionsflächen 42, 43 des Etalons 41 befindet sich das auf der Meßstrecke vorhandene Umgebungsmedium. Verändert sich die Brechzahl des Umgebungsmediums und damit die Luftwellenlänge im Etalon 41, so verändert sich auch die Lage des von der Differentialdiode 50 erfaßten Interferenzrings. Die Regeleinheit 30 korrigiert daraufhin über Injektionsstrom I und Laserdiodentemperatur T (Peltier-Element 31) die Betriebsparameter der Laserdiode derart, daß sich die Emissionsfrequenz gerade so ändert, daß die auf der Meßstrecke (und im Etalon 41) vorhandene Luftwellenlänge konstant bleibt. Zusätzlich zu dieser elektronischen Regelung der Emissionsfrequenz erfolgt eine optische Regelung der Laserdiode dadurch, daß in Abhängigkeit von der Brechzahl des Umgebungsmediums zwischen den Spiegelflächen des Etalons 41 Licht frequenzselektiv in die Laserdiode zurückgekoppelt wird, das die Laserdiode dazu veranlaßt, bevorzugt auf dieser Frequenz zu emittieren. Zum Erhalt eines solchen optischen Rückkopplungssignals scheint allerdings ein (hier nicht dargestelltes) kollinear beleuchtetes Etalon günstiger zu sein.

Zwischen der am Etalon 41 angeschlossenen Lichtleitfaser 46 und der über den Strahlteiler 54 mit Laserlicht versorgten Lichtleitfaser 55 ist eine weitere Lichtleitfaser 53 angeordnet, deren lichtquellenseitiges Ende über einen ersten Faserverbinder 56 am Gehäuse 27 mit der Lichtleitfaser 55 lösbar verbunden ist und deren etalonseitiges Ende mit der am Etalon 41 angeschlossenen Lichtleitfaser 46 lösbar verbunden ist (Faserverbinder 57). Diese weitere Lichtleitfaser läßt sich leicht verlegen, in ihrer Länge an die jeweiligen Gegebenheiten anpassen und bei Beschädigung einfach austauschen.

Um sicherzustellen, daß die Emissionsfrequenz der Laserdiode nicht durch unkontrollierbare frequenzselektive Rückkopplungen, wie sie z.B. aus dem "Quasietalon" zwischen der Außenfläche des Laserdiodenresonators und der ersten Spiegelfläche des Etalons 41 auftreten, in unerwünschter Weise beeinflußt wird, ist günstigerweise vorgesehen, daß zwischen der Laserdiode 2 und dem Etalon 41 eine Lichtleitfaser 53 angeordnet ist, deren optische Länge mindestens einen Meter beträgt. Aus ähnlichen Überlegungen beträgt die optische Länge der zwischen der Laserdiode 2 und dem Interferometerkopf 1 angeordneten Lichtleitfaser 32 günstigerweise mindestens einen Meter.

Die Fig. 2 zeigt in einer perspektivischen Ansicht ein Ausführungsbeispiel des in der erfindungsgemäßen Interferometeranordnung enthaltenen Interferometerkopfes mit einem wannenförmig ausgebildeten Gehäuse 4, in dem die optischen Komponenten des Interferometerkopfes Samt den Lichtleitfasern vorzugsweise im Bereich des eben ausgebildeten Wannenbodens angeordnet sind (vergleiche auch Fig. 3, die einen Längsschnitt zeigt). Insbesondere ist im Bereich des Wannenbodens 4a ein als Faserkoppler ausgebildeter Strahlteiler 7 angeordnet, der das über die Lichtleitfaser 6 zugeführte Laserlicht in einen Messstrahl (Lichtleitfaser 8) und einen Referenzstrahl (Lichtleitfaser 10) aufteilt. Weiters ist im Bereich des Wannenbodens eine ebenfalls als 2x2-Faserkoppler ausgebildete Rekombinationseinrichtung 15 angeordnet, in der der von der Meßstrecke zurückkehrende Meßstrahl und der in der Referenzfaser 10 geführte Referenzstrahl zur Interferenz gebracht werden. Die Rekombinationseinrichtung 15 weist zwei Ausgangs-Lichtleitfasern 16 und 17 auf, die komplementäre optische Interferenzsignale führen. Diese beiden Lichtleitfasern 16 und 17 enden frei in einem Abstand vor den Polarisatoren 20a - d, sodaß der Austrittslichtkegel aus der Lichtleitfaser 16 bzw. 17 jeweils zwei Polarisatoren 20a-d erfaßt, womit man am Ausgang 29 des Interferometerkopfes 4 phasenverschobene optische Interferenzsignale zur Verfügung hat. Die relative Phasenverschiebung zwischen den beiden durch die Polarisatoren 20a-d herausprojizierten Polarisationsrichtungen, die dieselben geometrischen Wege durch laufen, kann man mit einem nicht dargestellten Lambda 4-Plättchen oder aber auch dadurch erzielen, daß die beiden Polarisationsrichtungen im nicht dargestellten Retroreflektor einen unterschiedlichen Phasensprung erfahren. Der Retroreflektor ist so angeordnet, um den austretenden Meßstrahl 60 mit Parallelversatz zum Interferometerkopf 1 zurückzuwerfen (eintretender Meßstrahl 60').

Bei dem in den Fig. 2 und 3 dargestellten Ausführungsbeispiel sind die Ein- und Auskoppellinsen über verstellbare Linsenhalterungen 61 bzw. 62 verstellbar, am Gehäuse 4 (Tragkörper) in dessen Vorderwand 4b gelagert und über Arretierschrauben 63 bzw. 64 in der eingestellten Lage arretierbar. Die Linsenhalterung ist für die Einkoppellinse und die Auskoppellinse 9 gleich ausgebildet und wird an Hand der Fig. 3 (für den Fall der Auskoppellinse 9) näher beschrieben. Die Linsenhalterung 61 besteht im wesentlichen aus einer durchbohrten Metallkugel 61, in deren Bohrung die Auskoppellinse 9 eingesetzt ist. Von der anderen Seite her ist in die Metallkugel 61 ein Halterohr 65 eingeschraubt, welches die Ausgangslichtleitfaser 8 im Bereich der Linsenhalterung führt. Die Ausgangslichtleitfaser 8 endet im Brennpunktbereich F der Auskoppellinse 9. Durch verschieden weites Einschrauben des Halterohres 65 in die Metallkugel 61 kann der Abstand des Endes der Ausgangs-Lichtleitfaser 8 von der Linse 9 und damit die Divergenz des austretenden Meßstrahles 60 eingestellt werden. Die Ausgangslichtleitfaser 8 verläuft von dem als Wellenleiterkoppler ausgebildeten Strahlteiler 7 durchgehend bis zum Brennpunktsbereich F der Auskoppellinse 9. Bei der in Fig.3 nicht näher dargestellten Einkoppellinse verläuft ebenfalls ein durchgehender Lichtwellenleiter vom Brennpunktsbereich der Einkoppellinse durch das Halterohr 66 zur Rekombinationseinrichtung 15, die ebenfalls als Wellenleiterkoppler (Faserkoppler) ausgebildet ist.
Die Ausrichtung der Auskoppellinse 9 und damit der Richtung des ausgekoppelten Meßstrahles 60 erfolgt durch Einstellung der Lage der Metallkugel-Halterung 61 gegenüber dem Gehäuse 4, wobei das Halterohr 65 einen Angriffspunkt für diese Einstellung bietet. Nach erfolgter Ausrichtung wird die Arretierschraube 63 eingeschraubt und die Metallkugel 61 festgeklemmt. Diese Einstellung der Linsen kann bereits beim Hersteller erfolgen.

Um nun die optischen Komponenten und die zumindest abschnittweise schleifenförmig verlegten Lichtleitfasern starr mit dem Gehäuse 4 (Tragkörper) bzw. der damit fest verbundenen Einlage 4d zu verbinden, ist beim vorliegenden Ausführungsbeispiel vorgesehen, die Gehäusewanne mit einer aushärtenden Masse auszugießen. Diese Masse 67 ist in Fig. 3 gezeigt. Im ausgehärteten Zustand bietet diese Masse neben einer Festlegung der Komponenten und Lichtleitfasern eine zusätzliche Isolation und damit eine Erhöhung der Unempfindlichkeit gegenüber Schwankungen der Umgebungsbedingungen. Die am Gehäuse 4 fest haftende Masse kann ein im ausgehärteten Zustand duroplastisches Harz sein. Beispielsweise eignet sich ein Epoxid-Harz. Nach dem Vergießen kann der Interferometerkopf zusätzlich durch einen Deckel 68 verschlossen werden.

Zum Anschluß der Laserlicht-zuführenden flexiblen Lichtleitfaser 32 an den Interferometerkopf 1 ist eine zweiteilige Faserkupplung vorgesehen. Der interferometerkopfseitige Teil 70a dieser Faserkupplung ist in der hinteren Gehäusewand 4c des Interferometerkopf-Gehäuses 4 ausgebildet, während der lichtquellenseitige Teil 70b an die Lichtleitfaser 32 angeschlossen ist. Die Teile 70a und 70b passen formschlüssig ineinander. Ähnlich ist die Situation zur lösbaren Verbindung der Kunststoff-Lichtleitfasern 33a-d mit dem Interferometerkopf. Auch hier ist eine zweiteilige (mehrfach) Faserkupplung vorgesehen, deren interferometerkopfseitiger Teil 71a in der hinteren Gehäusewand 4c des Interferometerkopfes 1 ausgebildet ist, während der detektorseitige Teil 71b mit den Lichtleitfasern 33 a-d verbunden ist. Über diese lösbaren Faserkupplungen ist ein rascher Anschluß der Lichtleitfasern an den Interferometerkopf möglich.

Der in Fig. 4 in einer Draufsicht gezeigte Interferometerkopf ist ähnlich ausgebildet wie der in den Fig. 2 und 3 gezeigte Interferometerkopf. Im wesentlichen besteht der Unterschied - abgesehen von der Verlegung der Lichtleitfasern im Inneren des Interferometerkopfes-darin, daß die Lichtaufteilung auf die Polarisatoren 20 a-d durch gesonderte Strahlteiler 18, 19 (Faserkoppler) erfolgt, wie dies bereits in Fig.1 gezeigt ist. Ansonsten bezeichnen gleiche Bezugsziffern gleiche bzw. äqualente Teile wie in den vorhergehenden Figuren. Selbstverständlich sind auch bei den in Fig. 4 dargestellten Ausführungsbeispielen die Lichtleitfasern und die wesentlichen optischen Komponenten des Interferometerkopfes starr mit dem Interferometerkopf-Gehäuse 4 (Tragkörper) verbunden.

Bei dem in Fig. 5 geführten Ausführungsbeispiel sind die wesentlichen optischen Komponenten, insbesondere der Strahlteiler 7 und die Rekombinationseinrichtung 15, sowie ein Teil der Lichtwellenleiter auf einem Trägersubstrat 32 ausgebildet. Die Lichtwellenleiter sind eindiffundierte Wellenleiterbahnen. Das Trägersubstrat, wofür sich beispielsweise Glas oder Lithium-Niobat eignet, ist am Gehäuseboden 4b festgeklebt. Zum Anschluß der auf dem Trägersubstrat 72 ausgebildeten Wellenleiterbahnen an die außerhalb des Trägersubstrats liegenden Komponenten sind zunächst flexible Lichtwellenleiter 6,8,14 und 21a-d vorgesehen. Die gemäß der Erfindung dann starr mit dem Gehäuse 4 (Tragkörper) verbunden sind.

Bei den bisherigen Ausführungsbeispielen wurden die 4 phasenverschobenen Ausgänge unter Ausnutzung von zwei verschiedenen Polarisationen erreicht. Bei dem in Fig. 6 dargestellten Ausführungsbeispiel erhält man auf den Leitungen 21 a-d bzw. 33 a-d vier phasenverschobene Interferenzsignale durch Verwendung von Zwei Rekombinationseinrichtungen 15,15' und eine "Zweiteilung" des Referenzstrahles. Die Aufteilung des Referenzstrahles in zwei räumlich getrennt verlaufende Referenzfasern 10 und 10' erfolgt im Strahlteiler 73. Der von der nicht näher dargestellten Meßstrecke zurückkehrende und über die Einkoppellinse 13 eingekoppelte Meßstrahl wird im Strahlteiler 74 auf zwei räumlich getrennt verlaufende Lichtleitfasern 14 und 14' aufgeteilt. Über die Trimmeinrichtung 75 in der Referenzfaser 10' kann die Phasenlage des darin geführten Referenzstrahl-Teiles derart verändert werden, daß auf den Ausgangs-Lichtleitfasern 21 a-d vier biespielsweise jeweils um 90^{o} phasenverschobene optische Interferenzsignale zur Verfügung stehen. Bei dem in Fig. 6 dargestellten Ausführungsbeispiel sind die Lichtleitfasern im Bereich der Ein- und Auskoppellinsen 13 bzw. 9 durch starre Faserhalter 76 gehalten.

Um den Interferometerkopf 1 als Ganzes ausrichten zu können, damit beispielsweise der austretende Meßstrahl parallel zum Verschiebeweg eines Retroreflektors verläuft, ist dieser bzw. dessen Gehäuse 4 (Tragkörper) an einem Basisteil 77 verstellbar gelagert (vergleiche Fig. 7). Um die räumliche Lage des Interferometerkopfes 1 gegenüber dem Basisteil 77 festzulegen, weist dieser zahlreiche im folgenden näher beschriebene Justier- und Befestigungselemente auf.

Der Interferometerkopf ist über eine kugelgelenkartige Verbindung mit dem Basisteil 77 verbindbar.

Gemäß Fig. 7 ist dazu eine in den Interferometerkopf bzw. dessen Tragkörper 4 einsetzbare Kugel 78 vorgesehen, die mit einer Bohrung 79 versehen ist. Durch diese Bohrung 79 hindurch kann eine Befestigungsschraube in ein Gewinde 81 in Basisteil 77 eingeschraubt werden. Der Interferometerkopf ist damit mit dem Basisteil 77 verbunden, kann jedoch durch die kugelgelenkartige Verbindung noch in allen Raumrichtungen ausgerichtet werden. Um die Verdrehlage um die Y-Achse (vergleiche kleines Koordinatensystem in Fig. 7) festzulegen, sind zwei verstellbar am Interferometerkopf gelagerte Einstellschrauben 82 vorgesehen, deren kugelförmig abgerundete Spitzen 82a an der ebenen Oberfläche des Basisteiles zur Anlage kommen. Zur Einstellung der Verdrehlage um die X-Achse ist eine verstellbar am Interferometerkopf gelagerte Einstellschraube 83 vorgesehen, deren kugelförmig abgerundete Spitze 83a sich ebenfalls an der ebenen Oberfläche des Basisteiles 77 abstützt. Zur Einstellung der Verdrehlage um die Z-Achse ist ein in ein Langloch 84 eingesetzter Exzenter 85 vorgesehen, der eine zylindrische Außenfläche und eine exzentrisch angeordnete Bohrung 86 zur Aufnahme einer Befestigungsschraube 87 aufweist, welche in ein Gewinde 88 im Basisteil 77 eingeschraubt werden kann. Bei einer in das Gewinde 88 eingeschraubter Befestigungsschraube 87 kann durch Verdrehen des Exzenters 85 die Verdrehlage des Interferometerkopfes um die Z-Achse festgelegt werden.

Das in Fig. 8 dargestellte Ausführungsbeispiel zeigt die Erweiterung der bisher beschriebenen Ausführungsbeispiele auf eine Interferometeranordnung mit drei identischen Interferometerköpfen 1,1',1'' (beispielsweise solchen wie in Fig. 2 und 3). Bei geeigneter Anordnung der Interferometerköpfe läßt sich beispielsweise ein Dreiachssystem realisieren, mit dem die Lage eines Bauteiles im Raum erfaßbar ist. Gegenüber den bisher dargestellten Ausführungsbeispielen unterscheidet sich das in Fig. 8 dargestellte Ausführungsbeispiel, abgesehen von der dreifachen Zahl der Interferometerköpfe dadurch, daß das Licht aus der Laserdiode 2 zunächst einem Lichtverteiler 90 zugeführt wird, der zwei Strahlteiler 91 und 92 enthält, um das Licht an seinem Eingang 93 auf die drei Ausgänge 94 gleichmäßig zu verteilen. Der Eingang 93 des Lichtverteilers 90 ist über eine Glasfaser 95, deren optische Länge vorzugsweise mindestens einen Meter beträgt, mit der von der Laserdiode 2 kommenden Faser 38 verbunden, wobei die Glasfaser 95 beidseitig mit lösbaren Faserverbindungen angeschlossen ist. Die Interferometerköpfe 1,1',1'' sind über lösbare Faserverbinder 37' an die Ausgänge 94 des Lichtverteilers 90 angeschlossen. Interferometerkopfseitig sind zweiteilige lösbare Faserkupplungen 70a, 70b; 70a' 70b'; 70a'', 70 b'' vorgesehen. Die vier, aus jedem Interferometerkopf herausführenden und die optischen Interferenzsignale übertragenden Kunststoff-Lichtleitfasern 33a - d sind beim ersten Interferometerkopf 1 mit der in im Gehäuse 27 untergebrachten Detektor- bzw. Auswerteinrichtung 3 verbunden, während die Detektor- bzw. Auswerteinrichtungen 3', 3'' für die bei den anderen Interferometerköpfe 1', 1'' in gesonderten Gehäusen 27' und 27'' untergebracht sind. Interferometerkopfseitig sind zweiteilige lösbare Faserkupplungen 71a, 71b; 71a', 71b'; 71a'', 71 b'' vorgesehen.

Das über die monomode Glasfaser 53 und die elektrische Leitung 52 an das Gehäuse 27 angeschlossene Etalon 41 wird in der Praxis in der Nähe der Meßstrecke angeordnet werden, um sicherzustellen, daß zwischen den Spiegelflächen des Etalons dieselben Umweltbedingungen herrschen wie auf der Meßstrecke.

Die Erfindung ist selbstverständlich nicht auf die dargestellten Ausführungsbeispiele beschränkt. Beispielsweise kann an Stelle der Laserdiode auch jede andere geeignete Laserlichtquelle, insbesondere ein im Sichtbaren emittierender Helium-Neon-Laser zum Einsatz kommen. Emittiert die Laserlichtquelle auf einer bestimmten festen Frequenz, so besteht die Möglichkeit, die Umweltbedingungen (Brechzahl der Luft auf der Meßstrecke) rechnerisch zu kompensieren, um den Verschiebeweg oder die Entfernung in metrischen Einheiten zu ermitteln. Grundsätzlich ist es auch denkbar, daß der Tragkörper des Interferometerkopfes nur aus einer ebenen Platte besteht, wenngleich auch ein im wesentlichen geschlossenes Gehäuse günstiger erscheint. Anstelle von einzelnen Linsen zur Aus- und Einkopplung des Meßstrahles können jeweils auch aus mehreren Linsen bestehende Linse - anordnungen vorgesehen sein, die dann alle fest mit dem Tragkörper des Interferometerkopfgehäuses (gegebenenfalls nach einer vorhergehenden Justierung) verbunden sind. Im Interferometerkopf können abgesehen vom Strahlteiler 7 auch weitere Strahlteiler im Meß- und Referenzzweig vorgesehen sein. Neben der in Fig. 6 dargestellten Variante, bei der der Referenzstrahl durch einen Strahlteiler in zwei Teile geteilt wird, besteht beispielsweise auch die Möglichkeit, nach dem Strahlteiler 7 im Meßzweigabschnitt im Interferometerkopf einen oder mehrere weitere Strahlteiler anzuordnen, um zusätzliche Referenzzweige abzuzweigen.

## Patentansprüche

1. Interferometeranordnung mit
- einem Interferometerkopf (1), der einen starren Tragkörper (4) aufweist, mit dem ein Strahlteiler (7) zur räumlichen Aufteilung von Laserlicht in einen Meßstrahl und einen Referenzstrahl und wenigstens eine Rekombinationseinrichtung (15, 15') starr verbunden sind, an der jeweils ein über eine im Interferometerkopf (1) verlaufende Referenzstrecke (10, 10') geführter Referenzstrahl und ein über einen beweglichen Meßspiegel (12) oder eine reflektierende Meßfläche geführter Meßstrahl unter Bildung mindestens eines optischen Interferenzsignales interferieren, wobei der Interferometerkopf (1) eine mit dem Tragkörper (4) des Interferometerkopfes (1) in Verbindung stehende Auskoppellinse (9) zum Auskoppeln des im Interferometerkopf (1) in mindestens einem Lichtwellenleiter (8) geführten Meßstrahles (60) auf eine außerhalb des Interferometerkopfes (1) liegende Meßstrecke aufweist, und der Interferometerkopf (1) weiters mindestens eine mit dem Tragkörper (4) in Verbindung stehende Einkoppellinse (13) zum Einkoppeln des nach Reflexion an einem außerhalb des Interferometerkopfes (1) angeordneten Meßspiegel (12) oder an einer reflektierenden Fläche von der Meßstrecke zurückkehrenden Meßstrahles (60') in einen Lichtwellenleiter (14) aufweist und wobei zur Führung von Referenzstrahl(en) und der im Interferometerkopf (1) verlaufenden Teile des Meßstrahles Lichtwellenleiter (8, 10, 14, 14') vorgesehen sind, die mit dem Tragkörper (4) des Interferometerkopfes (1) starr in Verbindung stehen,
- einer außerhalb des Interferometerkopfes (1) angeordneten Laserlichtquelle (2), deren Laserlicht dem Interferometerkopf (1) zugeführt wird,
- einer außerhalb des Interferometerkopfes (1) angeordneten photoelektrischen Detektoreinrichtung (3) zur Erfassung und Auswertung von wenigstens einem optischen Interferenzsignal aus dem Interferometerkopf (1),
- wobei zur Zufuhr von Laserlicht von der Laserlichtquelle (2) zum Interferometerkopf (1) und gegebenenfalls zur Übertragung der optischen Interferenzsignale aus dem Interferometerkopf (1) zur photoelektrischen Detektoreinrichtung (3) jeweils mindestens eine flexible Lichtleitfaser (32; 33a-d) vorgesehen ist, wobei die flexible Lichtleitfaser (32) zur Laserlicht-Zufuhr eine monomode Glasfaser ist
- und wobei die flexible Lichtleitfaser(n) (32; 33a-d) am interferometekopfseitigen Ende jeweils über einen lösbaren Faserverbinder mit einem Lichtwellenleiter (6; 21a-d) des Interferometerkopfes (1) lösbar verbindbar ist (sind).

2. Interferometeranordnung nach Anspruch 1, dadurch gekennzeichnet, daß die Lichtwellenleiter im Interferometerkopf (1) Lichtleitfasern (6, 8, 10, 14, 14', 16, 17, 21a-d) sind.

3. Interferometeranordnung nach Anspruch 1, dadurch gekennzeichnet, daß die Lichtwellenleiter im Interferometerkopf (1) zumindest teilweise als in ein brägersubstrat (72) eindiffundierte Wellenleiterbahnen ausgebildet sind, wobei wenigstens der Strahlteiler (7) und die Rekombinationseinrichtung(en) (15) vorzugsweise auf demselben Trägersubstrat (72) integriert sind, wobei das Trägersubstrat (72) am Tragkörper des Interferometerkopfes (1) befestigt, vorzugsweise festgeklebt ist.

4. Interferometeranordnung nach einem der Ansprüche 1 bis 3, dadurch gekennzeichnet, daß die Lichtwellenleiter (6, 8, 10, 14, 14', 17, 17, 21a-d) im Interferometerkopf (1) im wesentlichen in einer Ebene, vorzugsweise auf einer ebenen Unterlage, angeordnet sind.

5. Interferometeranordnung nach einem der Ansprüche 1 bis 4, dadurch gekennzeichnet, daß die Lichtwellenleiter im Interferometerkopf Einmoden-Wellenleiter, beispielsweise monomode Glasfasern (6, 8, 10, 14, 14', 16, 17, 21a-d) sind.

6. Interferometeranordnung nach einem der Ansprüche 1 bis 5, dadurch gekennzeichnet, daß alle Lichtwellenleiter (6, 8, 10, 14, 14', 16, 17, 21a-d) im Interferometerkopf (1) und alle optischen Komponenten (7, 15, 15', 18, 19, 20a-d, 22, 23) im Interferometerkopf (1) starr mit dem Tragkörper (4) in Verbindung stehen.

7. Interferometeranordnung nach einem der Ansprüche 1 bis 6, dadurch gekennzeichnet, daß die Lichtleitfasern (6, 8, 10, 14, 14', 16, 17, 21a-d) im Interferometerkopf (1) zumindest stellenweise, vorzugsweise aber über ihre gesamte Länge, am Tragkörper (4) oder einem daran befestigten Teil festgeklebt sind.

8. Interferometeranordnung nach einem der Ansprüche 1 bis 7, dadurch gekennzeichnet, daß zumindest die den Meßstrahl und den bzw. die Referenzstrahl(en) führenden Lichtleitfasern (8, 10, 14, 14') im Interferometerkopf (1) mit einer aushärtenden Masse (67) vergossen sind.

9. Interferometeranordnung nach Anspruch 8, dadurch gekennzeichnet, daß die ausgehärtete Masse (67) fest am Tragkörper (4) haftet.

10. Interferometeranordnung nach Anspruch 8 oder 9, dadurch gekennzeichnet, daß die aushärtende Masse (67) ein im ausgehärteten Zustand duroplastisches Harz ist.

11. Interferometeranordnung nach einem der Ansprüche 8 bis 10, dadurch gekennzeichnet, daß die aushärtende Masse ein Epoxid-Harz (67) ist.

12. Interferometeranordnung nach einem der Ansprüche 8 bis 11, dadurch gekennzeichnet, daß alle optischen Komponenten (7, 15, 15', 18, 19, 20a-d, 22, 23) des Interferometerkopfes (1) samt Lichtwellenleitern (6, 8, 10, 14, 14', 16, 17, 21a-d) vorzugsweise zusammen mit den Ein- und Auskoppellinsen (9, 13) bzw. deren Halterungen (61, 62) und der Tragkörper (4) miteinander vergossen sind.

13. Interferometeranordnung nach einem der Ansprüche 1 bis 12, dadurch gekennzeichnet, daß der Weg, den jeder der Referenzstrahlen im Lichtwellenleiter (10, 10') zwischen Strahlteiler (7) und Rekombinationseinrichtung (15, 15') zurücklegt, im wesentlichen gleich lang ist wie die Summe jener Wege, die der Meßstrahl im Interferometerkopf (1) in Lichtwellenleitern (8, 14) zurücklegt.

14. Interferometeranordnung nach einem der Ansprüche 1 bis 13, dadurch gekennzeichnet, daß der Tragkörper (4) des Interferometerkopfes (1) von einem fest mit ihm verbundenen Gehäuse umgeben ist oder selbst ein Gehäuse bildet.

15. Interferometeranordnung nach Anspruch 14, dadurch gekennzeichnet, daß das Gehäuse (4) wannenförmig ausgebildet ist, wobei die optischen Komponenten (7, 15, 20a-d) des Interferometerkopfes (1) samt Lichtwellenleitern (6, 8, 10, 14, 16, 17) im Bereich der Gehäusewanne, vorzugsweise im Bereich eines eben ausgebildeten Wannenbodens (4a) angeordnet sind.

16. Interferometeranordnung nach Anspruch 14 oder 15, dadurch gekennzeichnet, daß das Gehäuse (4) allseitig geschlossen oder durch einen lösbar befestigten Deckel (68) verschließbar ist.

17. Interferometeranordnung nach einem der Ansprüche 14 bis 16, dadurch gekennzeichnet, daß der Tragkörper und/oder das Gehäuse (4) aus Metall bestehen.

18. Interferometeranordnung nach einem der Ansprüche 8 bis 12 und einem der Ansprüche 15 bis 18, dadurch gekennzeichnet, daß das Gehäuse (4) zumindest teilweise, gegebenenfalls nach einer Justierung justierbarer Komponenten (61, 62), mit der aushärtenden Masse (67) ausgegossen ist.

19. Interferometeranordnung nach einem der Ansprüche 14 bis 18, dadurch gekennzeichnet, daß die Ein- und Auskoppellinsen (9, 13) im Bereich der Gehäusewandung (4b) angeordnet sind.

20. Interferometeranordnung nach einem der Ansprüche 1 bis 19, dadurch gekennzeichnet, daß die Ein- und Auskoppellinsen (9, 13) starr mit dem Tragkörper des Interferometerkopfes (1) in Verbindung stehen.

21. Interferometeranordnung nach einem der Ansprüche 1 bis 19, dadurch gekennzeichnet, daß die Ein- und Auskoppellinsen (9, 13) am Tragkörper (4), vorzugsweise über verstellbare Linsenhalterungen (61, 62) verstellbar gelagert sind und in der eingestellten Lage vorzugsweise über Befestigungsmittel (63, 64) arretierbar sind.

22. Interferometeranordnung nach einem der Ansprüche 1 bis 21, dadurch gekennzeichnet, daß der bzw. die Faserverbinder (70a,b; 71a,b) zum lösbaren Anschluß von einer oder mehreren flexiblen Lichtleitfaser(n) (32; 33a-d) an den Interferometerkopf jeweils als zweiteilige Faserkupplung(en) ausgeführt ist (sind), wobei der interferometerkopfseitige Teil (70a; 71a) jeder Faserkupplung an einen oder mehrere Lichtwellenleiter (6; 21a-d) im Interferometerkopf (1) angeschlossen ist und mit dem Tragkörper bzw. dem Gehäuse (4) des Interferometerkopfes (1) verbunden oder daran ausgebildet ist, und wobei der mit dem interferometerkopfseitigen Teil korrespondierende andere Teil (70b; 71b) jeder Faserkupplung an eine oder mehrere flexible Lichtleitfaser(n) (32; 33a-b) angeschlossen ist.

23. Interferometeranordnung nach einem der Ansprüche 1 bis 22, dadurch gekennzeichnet, daß für die flexiblen Lichtleitfasern (32; 33a-d) am interferometerkopfseitigen Ende und am gegenüberliegenden Ende jeweils ein lösbarer, vorzugsweise zweiteiliger Faserverbinder (37, 40; 70a,b; 71a,b) vorgesehen ist.

24. Interferometeranordnung nach einem der Ansprüche 1 bis 23, dadurch gekennzeichnet, daß die flexible Lichtleitfaser zur Laserlicht-Zufuhr eine polarisationserhaltende Lichtleitfaser ist.

25. Interferometeranordnung nach einem der Ansprüche 1 bis 26, dadurch gekennzeichnet, daß die flexible(n) Lichtleitfaser(n) (33a-d) zur Übertragung der optischen Interferenzsignale aus dem Interferometerkopf (1) an eine photoelektrische Detektoreinrichtung (3) eine multimode Lichtleitfaser bzw. multimode Lichtleitfasern ist (sind).

26. Interferometeranordnung nach einem der Ansprüche 1 bis 25, dadurch gekennzeichnet, daß sie mehrere, vorzugsweise gleichartige Interferometerköpfe (1, 1', 1'') aufweist.

27. Interferometeranordnung nach Anspruch 26, dadurch gekennzeichnet, daß alle Interferometerköpfe (1, 1', 1'') - vorzugsweise über flexible Lichtleitfasern (32) - mit Laserlicht aus einer gemeinsamen Laserlichtquelle (2) gespeist sind.

28. Interferometeranordnung nach Anspruch 26 oder 27, dadurch gekennzeichnet, daß alle Interferometerköpfe (1, 1', 1'') über flexible Lichtleitfasern (33a-d) an jeweils eine oder gemeinsam an eine zentrale photoelektrische Detektoreinrichtung (3, 3', 3'') angeschlossen sind.

29. Interferometeranordnung nach einem der Ansprüche 26 bis 28, dadurch gekennzeichnet, daß jedem Interferometerkopf (1, 1', 1'') ein eigener beweglicher Meßspiegel, vorzugsweise Retroreflektor zugeordnet ist.

30. Interferometeranordnung nach einem der Ansprüche 1 bis 29, dadurch gekennzeichnet, daß sie eine Einrichtung (41) zur Erfassung und/oder Verfolgung der auf der Meßstrecke im gasförmigen Umgebungsmedium vorhandenen Brechzahl bzw. Lichtwellenlänge aufweist.

31. Interferometeranordnung nach einem der Ansprüche 1 bis 30, dadurch gekennzeichnet, daß der Interferometerkopf bzw. dessen Tragkörper (4) an einem Basisteil (77) verstellbar gelagert ist.

32. Interferometeranordnung nach einem der Ansprüche 1 bis 31, dadurch gekennzeichnet, daß er einstellbare Justierelemente (82, 83, 85) aufweist, um die räumliche Lage des Tragkörper (4) relativ zu einem Basisteil (77) festzulegen.

33. Interferometeranordnung nach Anspruch 32, dadurch gekennzeichnet, daß der Tragkörper (4) über eine kugelgelenkartige Verbindung (78) mit dem Basisteil (77) verbindbar ist und die Justierelemente am Interferometerkopf verstellbar gelagerte Schrauben (82, 83) umfassen, die sich jeweils mit ihrer vorzugsweise abgerundeten Spitze (82a, 83a) an einer Fläche des Basisteiles (77) abstützen.

34. Interferometeranordnung nach einem der Ansprüche 31 bis 33, dadurch gekennzeichnet, daß der Tragkörper (4) über einen Exzenter (85) gegenüber dem Basisteil (77) verstellbar ist.

## Claims

1. Interferometer arrangement comprising
- an interferometer head (1) having a rigid support body (4) to which there are rigidly connected a beam splitter (7) for spatially dividing laser light into a measuring beam and a reference beam and at least one recombination device (15, 15') at which a respective reference beam which is guided by way of a reference section (10, 10') extending in the interferometer head (1) and a respective measuring beam which is guided by way of a movable measuring mirror (12) or a reflecting measuring surface interfere, forming at least one optical interferometer head (1) having a coupling-out lens (9) which is connected to the support body (4) of the interferometer head (1), for coupling-out of the measuring beam (60) guided in the interferometer head (1) in at least one light waveguide (8) on to a measuring section which is disposed outside the interferometer head (1), the interferometer head (1) further having at least one coupling-in lens (13) connected to the support body (4) for coupling-in of the measuring beam (60') which is returning from the measuring section after reflection at a measuring mirror (12) arranged outside the interferometer head or at a reflecting surface, into a respective light waveguide (14), and light waveguides (8, 10, 14, 14') being provided for guidance of a reference beam or beams and the parts of the measuring beam which extend in the interferometer head (1), said light waveguides being rigidly connected to the support body (4) of the interferometer head (1),
- a laser light source (2) which is arranged outside the interferometer head (1) and whose laser light is fed to the interferometer head (1),
- a photoelectric detector device (3) arranged outside the interferometer head (1) for detecting and evaluating at least one optical interference signal from the interferometer head (1),
- at least one respective flexible optical fiber (32; 33a-d) being provided for the feed of laser light from the laser light source (2) to the interferometer head (1) and, if required, for transmission of the optical interference signals from the interferometer head (1) to the photoelectric detector device (3), the flexible optical fiber (32) for the laser light feed being a monomode glass fiber,
- and the flexible optical fiber(s) (32; 33a-d) at the end towards the interferometer head being releasably connectable to a light waveguide (6; 21a-d) of the interferometer head (1) by means of a releasable fiber connector.

2. Interferometer arrangement according to claim 1, characterised in that the light waveguides in the interferometer head (1) are optical fibers (6, 8, 10, 14, 14', 16, 17, 21a-d).

3. Interferometer arrangement according to claim 1, characterised in that the light waveguides in the interferometer head (1) are at least in part in the form of waveguide tracks which are diffused into a carrier substrate (72), at least the beam splitter (7) and the recombination device or devices (15) preferably being integrated on the same carrier substrate (27), the carrier substrate (72) being fastened, preferably glued, to the support body of the interferometer head (1).

4. Interferometer arrangement according to one of claims 1 through 3, characterised in that the light waveguides (6, 8, 10, 14, 14', 16, 17, 21a-d) in the interferometer head (1) are arranged substantially in one plane, preferably on a flat support.

5. Interferometer arrangement according to one of claims 1 through 4, characterised in that the light waveguides in the interferometer head are single-mode waveguides, for example monomode glass fibers (6, 8, 10, 14, 14', 16, 17, 21a-d).

6. Interferometer arrangement according to one of claims 1 through 5, characterised in that all light waveguides (6, 8, 10, 14, 14', 16, 17, 21a-d) in the interferometer head (1) and all optical components (7, 15, 15', 18, 19, 20a-d, 22, 23) in the interferometer head (1) are rigidly connected to the support body (4).

7. Interferometer arrangement according to one of claims 1 through 6, characterised in that the optical fibers (6, 8, 10, 14, 14', 16, 17, 21a-d) in the interferometer head (1) are glued fast at least in a portion-wise manner and preferably substantially over their entire length to the support body (4) or a portion fixed thereto.

8. Interferometer arrangement according to one of claims 1 through 7, characterised in that at least the optical fibers (8, 10, 14, 14') which carry the measuring beam and the reference beam or beams are in the interferometer head (1) cast with a hardening material (67).

9. Interferometer arrangement according to claim 8, characterised in that the hardened material (67) adheres firmly to the support body (4).

10. Interferometer arrangement according to claim 8 or 9, characterised in that the hardening material (67) is a resin which is thermosetting in the hardened condition.

11. Interferometer arrangement according to one of claims 8 through 10, characterised in that the hardening material is an epoxy resin (67).

12. Interferometer arrangement according to one of claims 8 through 11, characterised in that all optical components (7, 15, 15', 18, 19, 20a-d, 22, 23) of the interferometer head (1) with light waveguides (6, 8, 10, 14, 14', 16, 17, 21a-d), preferably together with the coupling-in and coupling-out lenses (9, 13) or the holders (61, 62) thereof and the support body (4) are cast together.

13. Interferometer arrangement according to one of claims 1 through 12, characterised in that the path followed by each of the reference beams in the light waveguide (10, 10') between the beam splitter (7) and the recombination device (15, 15') is of substantially the same length as the sum of those paths covered by the measuring beam in the interferometer head (1) in light waveguides (8, 14).

14. Interferometer arrangement according to one of claims 1 through 13, characterised in that the support body (4) of the interferometer head (1) is surrounded by a housing fixedly connected thereto or itself forms a housing.

15. Interferometer arrangement according to claim 14, characterised in that the housing (4) is of a through-like configuration, wherein the optical components (7, 15, 20a-d) of the interferometer head (1) together with light waveguides (6, 8, 10, 14, 16, 17) are arranged in the region of the housing through, preferably in the region of a through bottom (4a) which is of a flat configuration.

16. Interferometer arrangement according to claim 14 or claim 15, characterised in that the housing (4) is closed on all sides or can be closed by a releasably fixed cover (68).

17. Interferometer arrangement according to one of claims 14 through 16, characterised in that the support body and/or the housing (4) are of metal.

18. Interferometer arrangement according to one of claims 8 through 12 and one of claims 15 through 17, characterised in that the housing (4) is at least partially filled with the hardening material (67), possibly after adjustment of adjustable components (61, 62).

19. Interferometer arrangement according to one of claims 14 through 18, characterised in that the coupling-in and coupling-out lenses (9, 13) are arranged in the region of the housing wall (4b).

20. Interferometer arrangement according to one of claims 1 through 19, characterised in that the coupling-in and coupling-out lenses (9, 13) are rigidly connected to the support body (4) of the interferometer head (1).

21. Interferometer arrangement according to one of claims 1 through 19, characterised in that the coupling-in and coupling-out lenses (9, 13) are adjustably mounted on the support body (4), preferably by way of adjustable lens holders (61, 62), and can be arrested in the set position, preferably by way of fixing means (63, 64).

22. Interferometer arrangement according to one of claims 1 through 21, characterised in that the fiber connector or connectors (70a,b; 71a,b) for the releasable connection of one or more flexible optical fibers (32; 33a-d) to the interferometer head is or are each in the form of a respective two-part fiber coupling, wherein the part (70a; 71a) towards the interferometer head of each fiber coupling is connected to one or more light waveguides (6; 21a-d) in the interferometer head (1) and is connected to or is provided on the support body or the housing (4) of the interferometer head (1), and wherein the other part (70b; 71b) of each fiber coupling, which corresponds to the part towards the interferometer head, is connected to one or more flexible optical fibers (32; 33a-b).

23. Interferometer arrangement according to claims 1 through 22, characterised in that a respective releasable, preferably two-part fiber connector (37, 40; 70a,b; 71a,b) is provided for the flexible optical fibers (32; 33a-d) at the end towards the interferometer head and at the opposite end.

24. Interferometer arrangement according to one of claims 1 through 23, characterised in that the flexible optical fiber for the laser light feed is a polarization-maintaining optical fiber.

25. Interferometer arrangement according to one of claims 1 through 24, characterised in that the flexible optical fiber or fibers (33a-d) for transmission of the optical interference signals from the interferometer head (1) to a photoelectric detector device (3) is or are a multimode optical fiber or fibers.

26. Interferometer arrangement according to one of claims 1 through 25, characterised in that it has a plurality of preferably similar interferometer heads (1, 1', 1'').

27. Interferometer arrangement according to claim 26, characterised in that all interferometer heads (1, 1', 1'') are supplied with laser light from a common laser light source (2), preferably by way of flexible optical fibers (32).

28. Interferometer arrangement according to claim 26 or 27, characterised in that all interferometer heads (1, 1', 1'') are connected by way of flexible optical fibers (33a-d) to a respective photoelectric detector device or jointly to a central photoelectric detector device (3, 3', 3'').

29. Interferometer arrangement according to one of claims 26 through 28, characterised in that associated with each interferometer head (1, 1', 1'') is its own movable measuring mirror, preferably a retroreflector.

30. Interferometer arrangement according to one of claims 1 through 29, characterised in that it has a means (41) for detecting and/or following the refractive index or light wavelength on the measuring section in the gaseous ambient medium.

31. Interferometer arrangement according to one of claims 1 through 30, characterised in that the interferometer head or its support body (4) is mounted adjustably on a base portion (77).

32. Interferometer arrangement according to one of claims 1 through 31, characterised in that it has adjustable adjusting elements (82, 83, 85) for fixing the spatial position of the support body (4) relative to a base portion (77).

33. Interferometer arrangement according to claim 32, characterised in that the support body (4) can be connected to the base portion (77) by way of a ball joint-like connection (78) and the adjusting elements include screws (82, 83) mounted displaceably on the interferometer head, which each bear with their preferably rounded tip (82a, 83a) against a surface of the base portion (77).

34. Interferometer arrangement according to one of claims 31 through 33, characterised in that the support body (4) is displaceable relative to the base portion (77) by way of an eccentric (85).

## Revendications

1. Dispositif d'interféromètre comportant
- une tête (1) d'interféromètre qui présente un corps support rigide (4) auquel sont rigidement reliés un diviseur de faisceau (7) pour répartir spatialement la lumière laser en un faisceau de mesure et en un faisceau de référence ainsi qu'au moins un organe de recombinaison (15, 15') sur lequel interfèrent respectivement, en formant au moins un signal d'interférence optique, un faisceau de référence guidé le long d'une voie de référence (10, 10') courant dans la tête d'interféromètre (1) et un faisceau de mesure guidé par l'intermédiaire d'un miroir de mesure mobile (12) ou d'une surface de mesure réfléchissante, étant précisé que la tête d'interféromètre (1) présente, une lentille de découplage (9), reliée au corps support (4) de la tête d'interféromètre (1), pour découpler le faisceau de mesure (60) guidé, dans la tête d'interféromètre (1), dans au moins un guide d'ondes lumineuses (8), vers une voie de mesure située à l'extérieur de la tête d'interféromètre (1) et étant précisé que la tête d'interféromètre (1) présente en outre, au moins une lentille de couplage (13) reliée au corps support (4), pour coupler à un guide d'ondes lumineuses (14) le faisceau de mesure (60') qui revient de la voie de mesure après réflexion sur un miroir de mesure (12) disposé à l'extérieur de la tête d'interféromètre (1) ou sur une surface réfléchissante et étant précisé que pour guider le faisceau, ou les faisceaux, de référence et les parties du faisceau de mesure qui passent dans la tête d'interférence (1), sont prévus des guides d'ondes lumineuses (8, 10, 14, 14') qui sont rigidement reliés au corps support (4) de la tête d'interféromètre (1),
- comportant aussi une source (2) de lumière laser qui est disposée à l'extérieur de la tête d'interféromètre (1) et dont la lumière laser est amenée à la tête d'interféromètre (1),
- ainsi qu'un organe détecteur photoélectrique (3), disposé à l'extérieur de la tête d'interféromètre (1), pour saisir et traiter au moins un signal d'interférence optique en provenance de la tête d'interféromètre (1),
- étant précisé que pour amener la lumière laser, depuis la source de lumière laser (2), à la tête d'interféromètre (1), et éventuellement pour transmettre les signaux d'interférence optiques, de la tête d'interféromètre (1), à l'organe détecteur photoélectrique (3), est chaque fois prévue au moins une fibre flexible (32; 33a-d) guide d'ondes lumineuses, la fibre flexible (32) guide d'ondes lumineuses prévue pour amener la lumière laser étant une fibre de verre monomode
- et étant précisé que la fibre flexible guide d'ondes lumineuses, ou les fibres flexibles guides d'ondes lumineuses, (32; 33a-d) peut être reliée (peuvent être reliées), avec possibilité de séparation, à leur extrémité située du côté de la tête d'interféromètre, chacune par l'intermédiaire d'un connecteur de fibres, séparable, avec un guide d'ondes lumineuses (6; 21a-d) de la tête d'interféromètre (1).

2. Dispositif d'interféromètre selon la revendication 1, caractérisé par le fait que les guides d'ondes lumineuses situés dans la tête d'interféromètre (1) sont des fibres guides d'ondes lumineuses (6, 8, 10, 14, 14', 16, 17, 21a-d).

3. Dispositif d'interféromètre selon la revendication 1, caractérisé par le fait que les guides d'ondes lumineuses situés dans la tête d'interféromètre (1) sont au moins partiellement conçus sous forme de trajets guides d'ondes obtenus par diffusion dans un substrat support (72), étant précisé que de préférence au moins le diviseur de faisceau (7) et l'organe (les organes) de recombinaison (15) sont intégrés sur le même substrat support (72), le substrat support (72) étant fixé, de préférence collé de façon fixe, sur le corps support de la tête d'interféromètre (1).

4. Dispositif d'interféromètre selon l'une des revendications 1 à 3, caractérisé par le fait que les guides d'ondes lumineuses (6, 8, 10, 14, 14', 17, 17, 21a-d) situés dans la tête d'interféromètre (1) sont disposes sensiblement dans un plan, de préférence sur une couche inférieure plane.

5. Dispositif d'interféromètre selon l'une des revendications 1 à 4, caractérisé par le fait que les guides d'ondes lumineuses situés dans la tête d'interféromètre sont des guides d'ondes monomodes, par exemple des fibres de verre monomodes (6, 8, 10, 14, 14', 16, 17, 21a-d).

6. Dispositif d'interféromètre selon l'une des revendications 1 à 5, caractérisé par le fait que tous les guides d'ondes lumineuses (6, 8, 10, 14, 14', 16, 17, 21a-d) situés dans la tête d'interféromètre (1) et tous les composants optiques (7, 15, 15', 18, 19, 20a-d, 22, 23) situés dans la tête d'interféromètre (1) sont rigidement reliés au corps support (4).

7. Dispositif d'interféromètre selon l'une des revendications 1 à 6, caractérisé par le fait que les guides d'ondes lumineuses (6, 8, 10, 14, 14', 16, 17, 21a-d) situés dans la tête d'interféromètre (1) sont collés de façon fixe, au moins par places, mais de préférence aussi sur toute leur longueur, sur le corps support (4) ou sur une pièce qui lui est fixée.

8. Dispositif d'interféromètre selon l'une des revendications 1 à 7, caractérisé par le fait qu'au moins les fibres guides d'ondes lumineuses (8, 10, 14, 14') qui guident le faisceau de mesure et le faisceau de référence, ou les faisceaux de référence, et sont situées dans la tête d'interféromètre (1) sont scellées avec une masse durcissable (67).

9. Dispositif d'interféromètre selon la revendication 8, caractérisé par le fait que la masse durcissable (67) adhère fermement au corps support (4).

10. Dispositif d'interféromètre selon la revendication 8 ou 9, caractérisé par le fait que la masse durcissable (67) est une résine thermodurcissable à l'état durci.

11. Dispositif d'interféromètre selon l'une des revendications 8 à 10, caractérisé par le fait que la masse durcissable est une résine époxyde (67).

12. Dispositif d'interféromètre selon l'une des revendications 8 à 11 , caractérisé par le fait que tous les composants optiques (7, 15, 15', 18, 19, 20a-d, 22, 23) de la tête d'interféromètre (1), avec les guides d'ondes lumineuses (6, 8, 10, 14, 14', 16, 17, 21a-d), de préférence avec les lentilles de couplage et de découplage (9, 13) ou leurs montures (61, 62) et le corps support (4) sont scellés les uns avec les autres.

13. Dispositif d'interféromètre selon l'une des revendications 1 à 12, caractérisé par le fait que le trajet que parcourt chacun des faisceaux de référence dans le guide d'ondes lumineuses (10, 10'), entre le diviseur de faisceau (7) et l'organe de recombinaison (15, 15') est sensiblement de même longueur que la somme des trajets que parcourt, dans les guides d'ondes lumineuses (8, 14), le faisceau de mesure dans la tête d'interféromètre (1).

14. Dispositif d'interféromètre selon l'une des revendications 1 à 13, caractérisé par le fait que le corps support (4) de la tête d'interféromètre (1) est entouré d'un boîtier, qui lui est fermement relié, ou bien forme lui-même un boîtier.

15. Dispositif d'interféromètre selon la revendication 14, caractérisé par le fait que le boîtier (4) a la forme d'une cuvette, les composants optiques (7, 15, 20a-d) de la tête d'interféromètre (1) avec les guides d'ondes lumineuses (6, 8, 10, 14, 16, 17) étant disposés dans la zone de la cuvette du boîtier, de préférence dans la zone d'un fond (4a), de forme plane, de la cuvette.

16. Dispositif d'interféromètre selon la revendication 14 ou 15, caractérisé par le fait que le boîtier (4) est fermé de tous les côtés ou peut être fermé par un couvercle (68) fixé de façon amovible.

17. Dispositif d'interféromètre selon l'une des revendications 14 à 16, caractérisé par le fait que le corps support et/ou le boîtier (4) sont en métal.

18. Dispositif d'interféromètre selon l'une des revendications 8 à 12 et l'une des revendications 15 à 17, caractérisé par le fait que le boîtier (4) est jointoyé au moins partiellement, éventuellement après un ajustement des composants ajustables (61, 62), avec la masse durcissable (67).

19. Dispositif d'interféromètre selon l'une des revendications 14 à 18, caractérisé par le fait que les lentilles de couplage et de découplage (9, 13) sont disposées dans la zone de la paroi (4b) du boîtier.

20. Dispositif d'interféromètre selon l'une des revendications 1 à 19, caractérisé par le fait que les lentilles de couplage et de découplage (9, 13) sont rigidement reliées avec le corps support de la tête d'interféromètre (1).

21. Dispositif d'interféromètre selon l'une des revendications 1 à 19, caractérisé par le fait que les lentilles de couplage et de découplage (9, 13) sont portées sur le corps support (4), de préférence avec possibilité de réglage par l'intermédiaire de montures réglables (61, 62) de lentilles et peuvent être bloquées dans la position réglée, de préférence par l'intermédiaire de moyens de fixation (63, 64).

22. Dispositif d'interféromètre selon l'une des revendications 1 à 21 caractérisé par le fait que le connecteur de fibres (ou les connecteurs de fibres) (70a,b; 71a,b) prévus pour connecter, de façon amovible, une ou plusieurs fibres flexibles guides d'ondes (32; 33a-d) à la tête d'interféromètre sont chacune réalisées sous forme de coupleur (coupleurs) de fibres en deux parties, la partie (70a; 71a) de chaque coupleur de fibre situé du côté de la tête d'interféromètre étant reliée à un ou plusieurs guides d'ondes lumineuses (6; 21a-d) situés dans la tête d'interféromètre (1) et étant reliée au corps support ou au boîtier (4) de la tête d'interféromètre (1) ou formée avec eux, et l'autre partie (70b; 71b) de chaque coupleur de fibre correspondant à la partie située du côté de la tête de l'interféromètre étant reliée à une ou plusieurs fibres flexibles guides d'ondes lumineuses (32; 33a-b).

23. Dispositif d'interféromètre selon l'une des revendications 1 à 22, caractérisé par le fait que pour les fibres flexibles guides d'ondes lumineuses (32; 33a-d) est respectivement prévu, à l'extrémité située du côté de la tête de l'interféromètre et à l'extrémité opposée, un connecteur de fibres (37, 40, 70a,b, 71a,b) séparable, de préférence en deux parties.

24. Dispositif d'interféromètre selon l'une des revendications 1 à 23, caractérisé par le fait que la fibre flexible guide d'ondes lumineuses prévue pour amener la lumière laser est une fibre guide d'ondes lumineuses conservant la polaristion.

25. Dispositif d'interféromètre selon l'une des revendications 1 à 24, caractérisé par le fait que la fibre flexible guide d'ondes lumineuses, ou les fibres flexibles guides d'ondes lumineuses (33a-d), prévues pour transmettre les signaux d'interférence optiques, de la tête d'interféromètre (1) à un organe de détection photoélectrique (3), est une fibre guide d'ondes lumineuses multimode, ou sont des fibres guides d'ondes lumineuses multimodes.

26. Dispositif d'interféromètre selon l'une des revendications 1 à 25, caractérisé par le fait qu'il présente plusieurs têtes d'interféromètre (1, 1', 1''), de préférence identiques.

27. Dispositif d'interféromètre selon la revendication 26, caractérisé par le fait que toutes les têtes d'interféromètre (1, 1', 1'') sont alimentées en lumière laser à partir d'une source commune (2) de lumière laser - de préférence par l'intermédiaire de fibres flexibles guides d'ondes lumineuses (32).

28. Dispositif d'interféromètre selon la revendication 26 ou 27, caractérisé par le fait que toutes les têtes d'interféromètre (1, 1', 1'') sont reliées, par l'intermédiaire de fibres flexibles guides d'ondes lumineuses (33a-d), à, chacune, un organe détecteur photoélectrique ou, en commun, à un organe détecteur photoélectrique commun (3, 3', 3'').

29. Dispositif d'interféromètre selon l'une des revendications 26 à 28, caractérisé par le fait qu'à chaque tête d'interféromètre (1, 1', 1'') correspond un miroir de mesure mobile propre, de préférence rétroréfléchissant.

30. Dispositif d'interféromètre selon l'une des revendications 1 à 29, caractérisé par le fait qu'il présente un organe (41) pour la saisie et/ou la poursuite de l'indice de réfraction ou de la longueur d'onde lumineuse qui se présente sur la voie de mesure dans le médium ambiant gazeux.

31. Dispositif d'interféromètre selon l'une des revendications 1 à 30, caractérisé par le fait que la tête d'interféromètre, ou son corps support (4), est portée, avec possibilité de réglage, sur une pièce de base (77).

32. Dispositif d'interféromètre selonl'une des revendications 1 à 31, caractérisé par le fait qu'il présente des éléments d'ajustement réglables (82, 83, 85) pour déterminer la position spatiale du corps support (4) par rapport à une pièce de base (77).

33. Dispositif d'interféromètre selon la revendication 32, caractérisé par le fait que le corps support (4) peut être relié à la pièce de base (77) par l'intermédiaire d'une liaison du type à rotule (78) et que les éléments d'ajustement prévus sur la tête d'interféromètre comprennent des vis (82, 83), de portée réglable, qui s'appuient, chacune par sa pointe de préférence arrondie (82a, 83a), sur une surface de la pièce de base (77).

34. Dispositif d'interféromètre selon l'une des revendications 31 à 33, caractérisé par le fait que le corps support (4) est réglable par rapport à la pièce de base (77) au moyen d'un excentrique (85).
